(19) **Europäisches Patentamt / European Patent Office / Office européen des brevets**

(11) **EP 2 366 822 B1**

(12) **FASCICULE DE BREVET EUROPEEN**

(45) Date de publication et mention de la délivrance du brevet:
**30.04.2014 Bulletin 2014/18**

(21) Numéro de dépôt: **11305283.1**

(22) Date de dépôt: **15.03.2011**

(51) Int Cl.:
*B32B 5/06* (2006.01)　　*B32B 5/10* (2006.01)
*B32B 5/26* (2006.01)　　*D04H 1/413* (2012.01)
*D04H 1/49* (2012.01)　　*D04H 1/492* (2012.01)
*D04H 1/498* (2012.01)　　*D04H 1/587* (2012.01)
*D04H 3/105* (2012.01)　　*D04H 3/11* (2012.01)
*D04H 3/12* (2006.01)　　*D04H 1/48* (2012.01)
*D06N 5/00* (2006.01)

(54) **Produit non-tissé contenant des particules organiques et/ou minérales et son procédé de fabrication**

Vliesstoffprodukt mit organischen und/oder anorganischen Partikeln und dessen Herstellungsverfahren

Nonwoven product containing organic and/or mineral particles and its method of manufacturing

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2010 FR 1051890**

(43) Date de publication de la demande:
**21.09.2011 Bulletin 2011/38**

(73) Titulaire: **Freudenberg Politex SA (Société Anonyme)**
**68000 Colmar (FR)**

(72) Inventeurs:
• **Rosé, Frédéric**
**68340 RIQUEWIHR (FR)**
• **Riboulet, Georges**
**68000 COLMAR (FR)**

• **Migliavacca, Massimo**
**20149 MILANO (IT)**
• **Losser, Jean-Marc**
**67600 MUSSIG (FR)**
• **Groten, Robert**
**68280 SUNDHOFFEN (FR)**

(74) Mandataire: **Nuss, Laurent et al**
**Cabinet Nuss**
**10, rue Jacques Kablé**
**67080 Strasbourg Cedex (FR)**

(56) Documents cités:
EP-A1- 0 725 187　　EP-A1- 1 629 968
EP-A1- 2 036 701　　FR-A1- 2 883 303
US-A- 3 936 555　　US-A- 4 622 260
US-A1- 2009 048 371

EP 2 366 822 B1

**Description**

La présente invention concerne le domaine des supports à base de non-tissés en textiles synthétiques.

Elle est relative à un produit non-tissé souple et stable dimensionnellement, sous forme d'armature ou de support en polymères thermoplastiques constitué de filaments ou fibres liés chimiquement, ainsi que son procédé de fabrication.

Plus particulièrement, la présente invention vise l'amélioration des propriétés physiques et mécaniques de textiles non-tissés en fibres ou filaments continus liés chimiquement, par l'utilisation de charges minérales et/ou organiques, par exemple intégrées dans le liant lors de la phase d'imprégnation, d'enduction ou de dispersion, et ainsi partiellement ou totalement encapsulées par la résine après réticulation.

La charge particulaire minérale et/ou organique peut être constituée d'un mélange de différentes populations en granulométrie et/ou en nature, permettant d'augmenter à la fois le nombre des liaisons entre les couches du réseau fibreux constituant le produit non-tissé, et éventuellement la taille des points de liaison entre filaments ou fibres.

Dans le domaine précité, l'évolution actuelle tend vers la réalisation de nouveaux produits non-tissés, soit par allégement des composants, soit par l'utilisation de produit moins nobles, mais durables ou renouvelables ou recyclables, ou encore à contenu énergétique moindre, pour des raisons économiques, ou environnementales.

Dans le même temps, la recherche de la baisse des coûts de production pousse les fabricants à produire de plus en plus rapidement, ce simultanément avec des exigences de plus en plus élevées.

Les propriétés mécaniques et de stabilité à chaud des produits non-tissés utilisés comme armatures deviennent des facteurs absolument déterminants, quant à leur aptitude à transformation lors du bituminage ou de traitements à chaud sous contrainte analogues, du fait d'un effet mémoire thermique, ainsi qu'en regard des exigences de qualité et de durabilité dans l'application finale.

Actuellement, ces armatures sont fréquemment constituées d'un non-tissé de 80g/m$^2$ à 350g/m$^2$ pouvant être lié et stabilisé chimiquement dans le cas de support homopolymérique, ou thermiquement dans le cas de l'utilisation de surfaces constituées de deux polymères par la fusion de l'un d'entre eux.

Ces surfaces ou produits non-tissés peuvent être dans certains cas renforcé(e)s de fils, de grilles, de voiles ou de tissés en verre ou en polymères synthétiques à très hauts modules, avant d'être éventuellement utilisé(e) en tant qu'armatures destinées à être imprégnées et enduites à l'aide de bitumes modifiés par des polymères ou d'autres substrats, ou de subir des transformations sous contraintes thermiques.

D'une façon générale, ces surfaces, après mise en nappe suivant des procédés de fabrication par voie sèche, par voie humide ou par voie fondue connus de l'homme du métier, subissent un entremêlement par aiguilletage mécanique ou par liage hydraulique avant leur consolidation thermique et/ou chimique afin d'assurer une cohésion au moins partielle du réseau fibreux et ainsi lui conférer l'essentiel de sa résistance à la rupture

Le liage chimique ou thermique intervenant ultérieurement a pour objectif de rendre la surface ou le produit non-tissé dimensionnellement stable par rapport aux contraintes thermomécaniques auxquelles la surface ou le produit peut être soumis(e).

Un éventuel renforcement additionnel de ces textiles, par des fils, des grilles ou des tissés de verre ou en polymères à très haut modules, incorporé(e)s avant le liage mécanique ou hydraulique ou chimique ou au cours de la mise en nappe, a pour objectif de réduire davantage encore la déformabilité sous contrainte à chaud (à la température de post traitement ou de transformation) de ces structures fibreuses ainsi stabilisées.

En effet, ces surfaces ou produits non-tissés en nappes exigent, tant à la pose qu'au vieillissement, une grande stabilité dimensionnelle. De surcroit, ils subissent lors de leur fabrication ou transformation simultanément des contraintes mécaniques et thermiques d'intensités bien supérieures à celles subies en cours d'utilisation ou de mise en oeuvre finale.

De nombreux types de produits non-tissés, répondant de manière plus ou moins satisfaisante aux exigences précitées, ainsi que leurs procédés de fabrication, ont déjà été proposés et sont connus dans le domaine.

Ainsi, le brevet français FR 88 16711 décrit un procédé de fabrication d'un support à base de non-tissé pour article plat de bonne stabilité dimensionnelle, pouvant être lié chimiquement ou thermiquement, présentant un poids entre 20 et 500g/m$^2$ et renforcé longitudinalement par des fils continus à haut modules, de préférence supérieurs à 50 GPa. Dans le produit non-tissé résultant, la rupture des fils de verre intervient, sous une température de 180°C, sous une contrainte d'au moins 80 N par mètre de largeur et le module à froid est le même avec ou sans fils de renfort. La stabilité dimensionnelle à chaud et la déformabilité s'en trouvent ainsi sensiblement améliorées par rapport à des produits non-tissés standards.

Par le document US 6 221 973, on connaît la composition, ainsi que le mécanisme de réticulation aux environs de 200°C, de liants chimiques aqueux pour des produits non-tissés utilisés dans l'industrie des armatures d'étanchéité. Ces liants consistent en des mélanges d'un polyacide contenant au moins deux groupes carboxyliques, d'un polyalcool contenant au moins deux groupes hydroxyliques et d'un accélérateur.

Afin de répondre aux nouvelles normes internationales, la résine résultante formant liant divulguée par ce document US est substantiellement libre de formaldéhyde. Cette résine est imprégnée sur un support non tissé en fibres de verre destiné à la production de chapes bituminées. Les fibres de verre étant en elles-mêmes insensibles au domaine de température pratiqué lors de l'enduction d'asphalte, la fonction essentielle du liant est alors d'assurer la cohésion des fibres par la solidité et l'adhérence des points de liaisons chimiques, afin d'éviter un retrait mécanique de la surface, en développant une résistance acceptable, la surface n'étant pas préalablement consolidée.

Contrairement aux armatures en polyester, et plus généralement les produits non-tissés en polymères thermoplastiques, les fibres ou fils de verre composant la structure décrite dans ce document US ne subissent pas de modifications structurelles liées aux fortes tensions et températures exercées, qui peuvent engendrer ensuite une rémanence de comportement en retrait lors de cycles thermiques en cours d'utilisation.

De nombreux autres exemples de liants permettant de consolider des surfaces non-tissés sont connus dans l'état de la technique, par example par les documents US 4 076 917, EP 0 583 086 et WO 97/31036.

Certaines applications ou exigences produits/marché récentes demandent simultanément une très bonne stabilité dimensionnelle conjuguée à une augmentation de l'épaisseur des produits non-tissés.

Des contraintes techniques et économiques n'autorisant pas toujours une augmentation de la masse surfacique, il est alors nécessaire d'intervenir sur une diminution de la densité du produit, généralement située dans un domaine de 0,15 à 0,3, soit environ 70 à 80 % de vide en fonction de la matière à lier.

Cette augmentation d'épaisseur à grammage constant influence, on le comprend aisément, négativement le nombre ainsi que la taille des points de liaison, par l'augmentation des distances entre filaments ou fibres en couches superposées selon l'axe Z et par conséquent influence négativement sur la stabilité et/ou le module du produit non-tissé concerné.

Les documents US 6 299 936 et EP 1 1 664 418 citent l'utilisation de résines réticulables en dilution aqueuse de 40 % à 95 %, éventuellement additionnées de charges minérales telles que le Boron, des silicates ou des fibres de verre, en vue de la réalisation de produits très rigides et épais (>1cm), constitués de fibres inorganiques et utilisés dans l'isolation.

Ces documents évoquent également des applications en relation avec la consolidation possible d'armatures d'étanchéités ou de sous couches de tapis ou de papier. Toutefois, les supports visés sont composés uniquement de fibres ou de filaments de verre, donc insensibles à la température dans les domaines pratiqués. De plus, les produits non-tissés visés ne sont pas préalablement liés par un entremêlement du type aiguilletage hydraulique ou mécanique, fragilisant considérablement le réseau.

Par ailleurs, le document US 2009/0048371 décrit la réalisation d'une membrane d'étanchéité bituminée sur les deux faces, basée sur un non-tissé en fibres synthétiques ou artificielles, qui est consolidé par un mélange d'au moins un liant chimique et de l'hydroxyde d'aluminium.

Le séchage et la réticulation du liant sont effectués de préférence à une température de 190°C à 210°C pendant environ 0,5 minutes à environ 5 minutes et de préférence de 1,3 à 3,0 minutes. Le taux pondéral de liant à sec est compris de préférence entre 15 et 20 % (0,5 % à 30 %) du poids du produit non-tissé à lier. L'hydroxyde d'aluminium est incorporé avec un taux de 10 % à 100 % du taux de liant chimique à sec. La taille des particules d'hydroxyde d'aluminium se situe dans un domaine de 0,5 $\mu$m à 50 $\mu$m et de préférence entre 0,9 $\mu$m et 5 $\mu$m. La nappe non-tissée est ensuite enduite ou imprégnée de bitume pour former la membrane.

Ce document US revendique une amélioration de la charge de rupture et de la stabilité thermique de la surface ainsi réalisée.

Néanmoins, dans les exemples comparatifs cités, on constate en particulier lors de l'utilisation de 10 parties de carbonate de calcium ou de kaolin, une diminution très significative de la charge à la rupture et une augmentation de la déformabilité.

Dans le document BE 858 986 est décrite l'utilisation d'un liant comprenant un mélange de polymère, d'un liant formé en émulsion et d'une charge inerte destinée à accroitre la résistance mécanique de l'étoffe. La surface à lier est constituée d'un mélange de fibres synthétiques, naturelles et/ou artificielles dans des grammages légers, la cohésion et les propriétés finales de l'étoffe n'étant assurées qu'à l'aide de ce liant fixant les fibres, pour éviter ou améliorer le délitement.

La masse surfacique moyenne de ces surfaces est de l'ordre de 25 à 35 g/m$^2$ et la réalisation de surfaces plus lourdes est assurée par superposition et consolidation ultérieure des surfaces unitaires.

Le niveau de résistance atteint dans le sens de traction le plus favorable, même amélioré par les charges minérales utilisées, reste très faible et de l'ordre de 50N à 80N/5 cm ramené à 100 g/m$^2$. Ces valeurs sont à comparer avec celles d'un produit non-tissé formant armature d'étanchéité, qui sont de l'ordre de 5 à 10 fois supérieures, pour atteindre 250 à 350N/5 cm pour le même poids final.

Le domaine d'application des produits décrits dans ce document BE se situe principalement dans le cadre des textiles à usage quasi unique, ou de l'isolation thermique. Ces produits non-tissés sont impropres à une utilisation dans le cadre des armatures d'étanchéité ou de supports thermiquement stables, du fait de la faiblesse de la cohésion ainsi que du niveau des propriétés mécaniques obtenues. Il est en outre relevé que certaines charges, telles que le silicate de calcium, génèrent une perte de résistance du produit non-tissé.

La présente invention vise, en relation avec un produit non-tissé souple, de densité inférieure à 1, à base de matériau(x) synthétique(s), et intégrant au moins un liant, à améliorer les propriétés physiques et mécaniques de ce produit, en augmentant en particulier la taille et le nombre des points de liaison entre les fibres ou filaments appartenant aux différentes couches du produit, et préférentiellement également entre les fibres ou filaments d'une même couche.

L'invention devrait avantageusement également permettre de moduler, de modifier, ou d'améliorer les propriétés physiques et/ou mécaniques et particulièrement le comportement élastique, et la déformabilité à froid et à chaud de production de supports non-tissés, notamment consolidés par un liant chimique réticulable.

A cet effet, l'invention a pour objet un produit non-tissé souple, de densité inférieure à 1 et formé d'au moins deux couches de fibres ou de filaments synthétiques superposées dans la direction Z perpendiculaire au plan XY dudit produit, ayant subi au moins une opération d'aiguilletage mécanique ou hydraulique, ledit produit non-tissé intégrant en outre des charges particulaires sous forme de particules minérales et/ou organiques distribuées de manière monomodale ou multimodale dans ce produit et au moins partiellement enrobées ou encapsulées par un matériau liant apte à relier au moins ponctuellement les filaments ou fibres entre eux (elles),

produit non-tissé caractérisé en ce qu'au moins une population ou fraction des particules organiques et/ou minérales, dites "grosses particules", présente une taille telle que : $3 \text{ x } (\sqrt{SMf})^3 \leq v$, préférentiellement $5 \text{ x } (\sqrt{SMf})^3 \leq v$,

où SMf correspond à la section moyenne des fibres ou filaments formant les couches du produit non-tissé et v représente le volume individuel moyen des particules organiques ou minérales.

De manière avantageuse, les grosses particules constituent la fraction majoritaire, en termes de masse et/ou de volume, des charges particulaires présentes dans le produit non-tissé et réalisent des pontages ou des connexions entre les noeuds, mailles, fibres et filaments d'une même couche et entre les couches superposées formant le produit non-tissé.

Selon une variante de réalisation préférée de l'invention, le produit non-tissé fait état d'au moins l'une des caractéristiques suivantes :

- les grosses particules présentent au moins une dimension d telle que d ≥ 3 x DMf, préférentiellement d ≥ 5 x DMf, où DMf correspond au diamètre moyen des fibres ou filaments formant les couches du produit non-tissé,
- les grosses particules présentent une taille moyenne correspondant à au moins 20 % de la taille moyenne des pores apparents des couches du produit non-tissé vues selon la direction Z perpendiculaire au plan XY du produit non-tissé.

Dans le cadre de produits non-tissés dont les fibres filaments présentent une valeur de titre située dans la plage usuelle, les grosses particules présentent avantageusement une granulométrie moyenne qui est supérieure à environ 50 $\mu$m, préférentiellement supérieure à environ 60 $\mu$m.

Bien qu'une taille importante des grosses particules soit bénéfique pour l'établissement des liaisons et pontages entre fibres et filaments de couches éloignées, il faut néanmoins que ces grosses particules puissent être introduites dans le réseau fibreux du produit non-tissé et qu'en outre elles ne génèrent pas de surépaisseur locale (par déformation des couches ou en étant saillant). Il convient donc que leur taille soit également adaptée pour qu'elles puissent se nicher dans l'épaisseur du produit non-tissé.

Les inventeurs ont constaté que ces buts étaient atteints lorsque le volume individuel v des grosses particules vérifie en outre l'inéquation suivante : $v \leq 50 \text{ x } (\sqrt{SMf})^3$, préférentiellement $v \leq 30 \text{ x } (\sqrt{SMf})^3$.

Préférentiellement, au moins l'une des deux dispositions suivantes est également vérifiée :

- les grosses particules présentent une taille moyenne inférieure à environ 120 %, préférentiellement à environ 100 %, de la taille moyenne des pores apparents des couches du produit non-tissé vues selon la direction Z perpendiculaire au plan XY dudit produit,
- les grosses particules font état d'une granulométrie moyenne inférieure à environ 400 $\mu$m, avantageusement à environ 300 $\mu$m, préférentiellement à environ 200 $\mu$m.

Afin d'améliorer la qualité et d'augmenter le nombre des liaisons entre fibres ou filaments d'une même couche, les charges particulaires minérales et/ou organiques comprennent également une population ou fraction de particules dont la granulométrie est inférieure à 30 $\mu$m, préférentiellement à 20 $\mu$m.

En accord avec un mode de réalisation avantageux de l'invention, les charges minérales et/ou organiques sont présentes avec un taux pondéral compris entre 1 % et 30 %, préférentiellement entre 5 % et 25 %, du poids des fibres ou filaments formant les couches du produit non-tissé.

Dans la présente description, on entend par couche la superposition d'un ensemble de filaments ou de fibres orientés dans un plan XY et légèrement entremêlé dans le même plan.

Dans le cas d'un procédé par voie fondue (filament continus) la vitesse de filage (en général de 30 à 120 m/s) est telle que les filaments en rideau ou en faisceaux lors de la mise en nappe, sont "bambanés " sur eux mêmes, plus ou moins par paquets, en s'étalant sur le tablier de nappage, formant ainsi les couches de micro-nappage (micro couches, sous couches) de quelques millimètres carrés ou moins, visées de la présente invention.

Dans le cas d'un procédé par voie sèche où humide, les fibres préalablement individualisées sont déposées en continu en faisceaux sur le tablier de nappage, formant ainsi les couches de micro-nappage telles que définies ci-dessus.

Les systèmes de mise en nappe peuvent donner lieu éventuellement à la superposition de plusieurs rideaux ou faisceaux, aboutissant ainsi à la réalisation de couches de ces sous-couches de filaments ou de fibres. C'est le cas des procédés multi-rideaux (filaments continus) ou des procédés par voie sèche, dans lesquels des voiles se superposent les uns sur les autres.

Bien entendu, les couches de couches peuvent être réalisées par assemblage de différents non-tissés préalablement liés. Les pontages en Z évoqués dans la présente touchent indifféremment les couches ou « sous couches » ou « micro couches » à leurs interfaces.

En vue d'éviter toute influence de la température dans les plages de températures auxquelles est normalement exposé le produit non-tissé durant ses phases de fabrication, de traitement ou d'application, le ou les matériau(x) formant les particules minérales et/ou organiques a (ont) une température de fusion supérieure à celle du ou des matériaux formant les fibres ou filaments des couches, le cas échéant à la température de fusion, d'activation, de réticulation ou de séchage du liant.

En variante, et en fonction des applications envisagées et des propriétés visées pour le produit non-tissé, il peut être prévu que la température de fusion des particules organiques est inférieure à celle des fibres ou filaments et, selon le cas, inférieure ou supérieure à la température de thermofixation, de séchage, d'activation ou de réticulation du matériau formant le liant.

Conformément à des caractéristiques additionnelles avantageuses de l'invention, il peut être prévu :

- que les particules formant les charges présentant une granulométrie supérieure à 100 $\mu$m, avantageusement supérieure à 60 $\mu$m, préférentiellement supérieure à 20 $\mu$m sont de nature ou d'origine organique,
- qu'une partie des particules formant les charges minérales et/ou organiques consistent en des particules expansibles avec la température.

Bien que le matériau synthétique formant les fibres ou filaments puisse être quelconque, pour autant qu'il soit apte à la production de non-tissé et adapté à l'application envisagée, les fibres ou filaments continus formant les couches du produit non-tissé sont à base d'un matériau polymère thermoplastique choisi dans le groupe formé par les polypropylènes, les polyesters, les polyamides, les polyéthylènes, ainsi que les copolymères de ces différents polymères et les mélanges possibles de ces différents polymères et copolymères.

Pour augmenter la cohésion structurelle du produit non-tissé, et améliorer ses performances dans des domaines et pour des caractéristiques ciblées, il peut être prévu qu'il intègre, éventuellement au niveau de ou entre deux ou plusieurs couches constitutives, des structures de renfort sous forme de filaments, de grille(s) et/ou de textile à caractéristiques de stabilisation élevés, les particules minérales et/ou organiques au moins partiellement enrobées ou encapsulées par le liant établissant des liaisons rigides ou réalisant des pontages entre ces structures de renfort et les filaments ou fibres des couches par l'intermédiaire dudit liant.

En accord avec des variantes de réalisation préférées de l'invention, il peut en outre être prévu :

- que le matériau formant les particules minérales est choisi dans le groupe formé par les carbonates, les silicates et les sulfates tels que le carbonate de calcium, l'hydroxyde de magnésium ou d'aluminium, le sulfate de baryum, l'argile, le kaolin, le quartz, le talc et les oxydes et les hydroxydes tels que l'oxyde de titane, la bauxite, la gibbsite,
- que le matériau formant les particules organiques est choisi dans le groupe formé par les celluloses, fibreuses ou particulaires, tels que le bois, la lignine, les graphites, les polymères recyclés thermodurcissables micronisés, tels que l'époxy et la bakélite, les polymères thermoplastiques micronisés, tels que le PET (polyéthylène téréphtalate), le PBT (polybutylène téréphtalate), le PP (polypropylène), le PE (polyéthylène), le PA (polyamide), ainsi que leurs copolymères, et/ou,
- que le matériau formant le liant est choisi dans le groupe formé par les résines avec ou sans formaldéhyde, les résines liquides, en émulsion ou en dispersion à base d'acrylate, de styrol-acrylate, de vinyl-acétate, de méthacrylate, de vinyl-acrylate, d'acrylamides, de méthyl-acryl-amides, d'éthyl-vinyl-acétate, de styrol-butadiène, de vinyl-alcool, de butadiène-acrylate, de polyuréthane, de silicone, les résines réticulantes, à base de phénol, de mélamine, d'urée, d'époxy, d'alkyde, de polyester.

La présente invention a également pour objet un procédé de fabrication d'un produit non-tissé souple, de densité inférieure à 1 et formé d'au moins deux couches de fibres ou de filaments superposées dans la direction Z perpendiculaire au plan XY dudit produit, ayant subi au moins une opération d'aiguilletage mécanique ou hydraulique, ledit produit non-tissé intégrant en outre des charges particulaires sous forme de particules minérales et/ou organiques distribuées de manière monomodale ou multimodale dans ce produit et au moins partiellement enrobées ou encapsulées par un matériau liant apte à relier au moins ponctuellement les filaments ou fibres entre eux (elles).

Conformément à l'invention, le procédé consiste notamment à réaliser, préalablement, simultanément ou postérieurement à l'intégration du matériau liant dans et/ou entre les couches de fibres ou de filaments, une étape d'incorporation de charges particulaires minérales et/ou organiques comprenant au moins une population ou fraction des particules organiques et/ou minérales, dites "grosses particules", présente un volume individuel tel que

$$3 \ \text{x} \ (\sqrt{SMf})^3 \leq \text{v}, \text{ préférentiellement } 5 \ \text{x} \ (\sqrt{SMf})^3 \leq \text{v},$$ où SMf correspond à la section moyenne des fibres ou filaments formant les couches du produit non-tissé et v représente le volume individuel moyen des particules organiques ou minérales.

De manière préférée, les grosses particules incorporées dans le produit non-tissé correspondent à des particules telles que décrites ci-dessus, l'opération d'aiguilletage étant effectuée avant ou après l'introduction des charges particulaires dans et entre les couches du produit non-tissé.

En vue de multiplier également ou de renforcer les points de liaison entre fibres ou filaments d'une même couche, il est avantageusement prévu que les charges particulaires minérales et/ou organiques incorporées comprennent également une population ou fraction de particules dont la granulométrie est inférieure à 30 $\mu$m, préférentiellement à 20 $\mu$m.

Le procédé consiste à incorporer les charges minérales et/ou organiques dans le produit non-tissé avec un taux pondéral compris entre 1 % et 30 %, préférentiellement entre 5 % et 25 %, du poids des fibres ou filaments formant les couches du produit non-tissé.

En accord avec une première variante de réalisation du procédé, l'ensemble des particules minérales et/ou organiques est incorporé simultanément dans le produit non tissé, préalablement ou simultanément avec le liant chimique.

En accord avec une seconde variante de réalisation du procédé, les particules minérales et les particules organiques sont incorporées de manière différenciée dans le produit non-tissé, les particules minérales étant introduites postérieurement aux particules organiques.

La température de fusion du ou des matériau(x) formant les particules minérales et/ou organiques peut être, comme indiqué précédemment, inférieure, égale ou supérieure à la température de fusion du ou des matériaux formant les fibres ou filaments des couches, le cas échéant à la température de fusion, d'activation, de réticulation ou de séchage du liant.

Dans le cadre du procédé selon l'invention, il peut en outre être prévu que :

- les particules présentant une granulométrie supérieure à 100 $\mu$m, avantageusement supérieure à 60 $\mu$m, préférentiellement supérieure à 20 $\mu$m sont de nature ou d'origine organique,
- une partie des particules formant les charges minérales et/ou organiques consistent en des particules expansibles avec la température, et/ou,
- les fibres ou filaments continus formant les couches du produit non-tissé sont à base d'un matériau polymère thermoplastique choisi dans le groupe formé par les polypropylènes, les polyesters, les polyamides, les polyéthylènes, ainsi que les copolymères de ces différents polymères et les mélanges possibles de ces différents polymères et copolymères.

Afin d'éviter une sédimentation ou une agglomération des particules minérales et/ou organiques, le procédé peut consister à utiliser un agent thixotrope ou dispersant, dans le cas d'une introduction des charges particulaires et du liant par imprégnation, lorsque la densité des particules est supérieure d'environ 30 %, préférentiellement d'environ 20 %, à celle du liant.

Enfin, il peut également être prévu d'intégrer dans le produit non-tissé, éventuellement au niveau de ou entre deux ou plusieurs couches constitutives, des structures de renfort sous forme de filaments, de grille(s) et/ou de textile à caractéristiques de stabilisation élevés, les particules minérales et/ou organiques au moins partiellement enrobées ou encapsulées par le liant établissant des liaisons rigides ou réalisant des pontages entre ces structures de renfort et les filaments ou fibres des couches par l'intermédiaire dudit liant.

L'invention sera mieux comprise, grâce à la description ci-après, qui se rapporte à des modes de réalisation préférés, donnés à titre d'exemples non limitatifs.

Le procédé de fabrication du produit non-tissé selon l'invention met en oeuvre, pour partie, des opérations connues de l'homme du métier.

Ainsi, les couches de fibres ou de filaments du produit non-tissé sont obtenues de manière connue soit par voie sèche, soit par voie fondue ou humide.

Quelle que soit le procédé précité mis en oeuvre, l'orientation filamentaire s'avère être pour l'essentiel distribuée en couches dans des plans XY. Des liaisons profondes selon l'axe Z n'existent quasiment pas naturellement.

Des procédés d'entremêlement, tel que l'aiguilletage mécanique ou le liage hydraulique, permettent d'orienter partiellement des fibres ou filaments surfaciques initialement en couches planes, dans la direction de l'épaisseur du produit. Un calandrage lisse ou par points ainsi que par air chaud traversant, permet aussi de fixer thermo-mécaniquement ce réseau par fusion partielle et ponctuelle du polymère. Sans ce type de liage les non-tissés ne disposent pratiquement d'aucune tenue mécanique.

Dans le cas d'un entremêlement par aiguilletage, le nombre de perforations généralement pratiqués se situe dans un domaine de 20 à 150 perforations par $cm^2$, et couramment dans une plage de 25 à 70 perforations par $cm^2$. Ce taux de perforations autorise donc au maximum une liaison ou un noeud filamentaires en Z tous les 1 à 2 mm, à condition toutefois que deux aiguilles distinctes ne perforent pas au même endroit, ce qui est relativement fréquent.

La cohésion par liage chimique du réseau fibreux est réalisée quant à elle aux points de croisement des fibres ou filaments, mais apparait principalement aux endroits d'accumulations multi filamentaires croisées dans les différents plans XY des couches superposées dans l'épaisseur du produit (superposition selon la direction Z).

Seuls les fibres ou filaments ou faisceaux de fibres ou filaments croisés contribuent au liaisonnement. Les filaments parallèles liés entre eux ou les parties monofilamentaire libres du réseau consomment de la résine par un enrobage du type âme/gaine sans pour autant contribuer de façon significative au renforcement du réseau.

La liaison en Z s'effectue quant à elle par collage de ces strates ou couches entre elles aux points de croisements correspondants, lorsqu'elles sont en contact.

Une augmentation de l'épaisseur du produit non-tissé avec maintien de la masse surfacique, entraîne nécessairement une diminution des points de liaison entre couches ou strates et donc une diminution de la cohésion structurelle et des propriétés physiques et mécaniques dudit produit.

L'invention vise notamment à pallier cet inconvénient en proposant l'introduction de charges minérales et/ou organiques comprenant en particulier des grosses particules répondant à un ou plusieurs de critères dimensionnels définis précédemment.

L'incorporation des charges particulaires peut être effectuée de différentes manières et à différentes étapes de la fabrication du produit non-tissé, en fonction notamment du type et du mode d'introduction du liant.

Avantageusement, l'introduction des charges peut être réalisée en même temps que celle du liant, par imprégnation.

De plus, les charges particulaires peuvent présenter différentes populations ou fractions granulométriques en fonction des propriétés particulières supplémentaires recherchées.

L'adjonction de charges minérales ou organiques dans la résine liante (destinée à imprégner les couches non-tissées) sous la forme d'un mélange d'au moins deux distributions granulométriques moyennes, permet artificiellement d'augmenter la taille, mais aussi et surtout le nombre des points de liage.

L'utilisation de granulométries dont la taille est de l'ordre 3 à 10 fois supérieure à celles du diamètre des fibres ou filaments généralement pratiqués dans les non-tissés (15 à 30 micromètres), soit de 50 à 150 micromètres pour les charges minérales ou organiques, permet d'augmenter le nombre des points potentiels de liage en assurant des pontages supplémentaires dans l'axe Z.

Les faibles granulométries d'un équivalent diamètre de 0,5 à 20 $\mu$m augmentent quant à elles la taille ou la masse des points de liage existants statistiquement naturellement.

Notamment pour les plus faibles granulométries, l'utilisation d'un agent dispersant évite la ré-agglomération des particules et participe de ce fait positivement à l'amélioration des modules à chaud des surfaces ou produits ainsi constitués.

En fonction de la densité de la charge minérale, il convient d'utiliser lorsque la granulométrie augmente au delà de 30 à 50$\mu$m, un agent thixotrope épaississant, qui évite la sédimentation et assure une parfaite dispersion de ces charges dans le liant chimique et ultérieurement dans la matrice en non-tissé. Cet agent évitant la sédimentation n'est généralement pas nécessaire lorsque les charges sont d'origines organiques du fait de leur bien plus faible densité (située entre 0,8 et 1,4). Pour les très fortes granulométries (en particulier au-delà de 100$\mu$m), des charges organiques sont préférablement utilisées

De même, et dans le cadre de la recherche d'une augmentation de l'épaisseur du produit à masse surfacique constante, l'utilisation par exemple de microsphères thermiquement expansibles peut s'avérer intéressante (voir par exemple le document WO 2006/068 574). Néanmoins, leur mise en oeuvre peut s'effectuer au détriment d'une perte de la stabilité dimensionnelle, ou une augmentation des allongements ou d'une baisse du module à froid comme à chaud. En effet, les distances entre noeuds de liaison dans l'axe Z augmentent, diminuant d'autant le nombre de points de cohésion et de liaison.

La solution selon l'invention avec des charges minérales ou organiques rigides de pontage dans l'axe Z permet de maintenir ou de limiter le niveau de déformabilité à chaud par une compensation des points de liaisons perdus, voire de l'améliorer en fonction du taux d'introduction et du domaine de souplesse ciblé.

De façon avantageuse lorsqu'une augmentation sensible de la masse surfacique n'est pas nécessairement recherchée, l'utilisation de charges organiques d'une densité deux à trois fois plus faible que les charges minérales, peut s'avérer intéressante. Ces charges organiques peuvent être facilement obtenues par micronisation de polymères tels que du polyester du polypropylène ou du polyamide ou de tous polymères thermoplastiques ou thermodurcissables. Le broyage de polymères bouteilles ou la récupération des fines issues du lavage et de la mise en paillettes pour recyclage dans ces procédés permet économiquement de disposer de matériaux compatibles et de densité très proche du polymère constituant le non-tissé.

Par comparaison à l'entremêlement par aiguilletage, qui permet d'orienter et de créer de nouveaux points de croisements et d'entremêlement espacés de 1 à 2 mm dans l'axe Z pour 30 à 70 perforations par $cm^2$, l'intégration de 5 $g/m^2$ de charges de taille 40 à 60 $\mu$m (soit de 2 à 3 fois le diamètre des filaments) fournit de 500 à 6000 points supplémentaires, de liaisons potentielles en fonction de la densité de la charge, soit de 10 à 60 points par $mm^2$ de produit. Cette disposition permet si besoin de minimiser le nombre de perforations par aiguilletage (ce critère correspondant souvent à un goulot d'étranglement de productivité du fait des limites de vitesses de frappe de cette technologie).

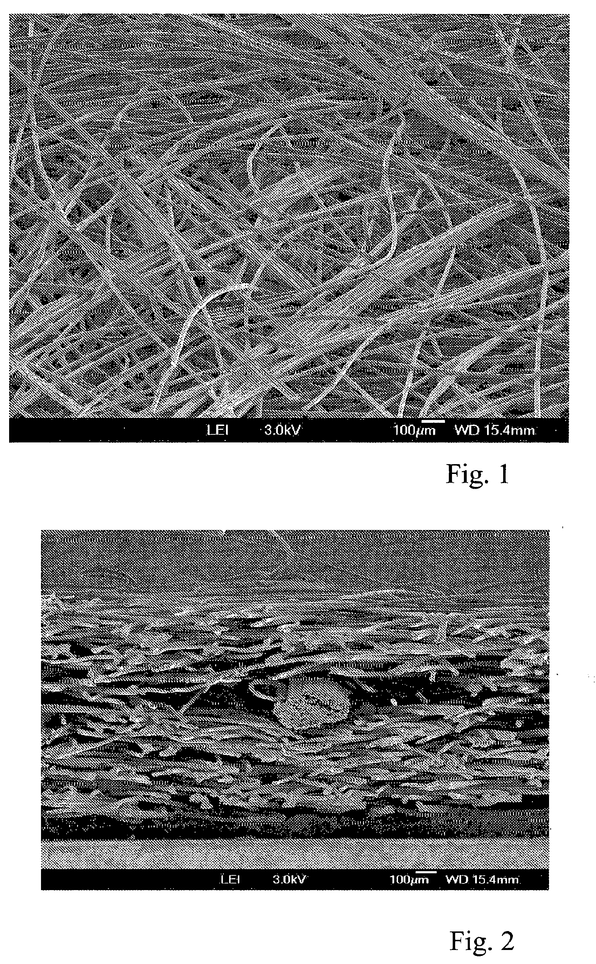

La figure 1 est une vue photographique prise au microscope électronique, illustrant l'entremêlage par aiguilletage d'un non-tissé.

Le liage chimique de textiles non-tissés par des résines réticulables est en général pratiqué avec un taux de liant en sec dans un domaine de 15 à 30 % du poids du non tissé. Une partie de ce liant ne contribue pas à la cohésion et la stabilité du produit du fait qu'il vient aussi enrober les filaments libres ou les faisceaux de filaments parallèles entres les noeuds de liaison. On peut estimer que 30 % à 50 % de la résine ainsi introduite est inefficace en regard de certaines propriétés mécaniques recherchées telles que la résistance à la rupture, ou les modules à froid ou à chaud.

La figure 2 est une vue photographique prise au microscope électronique d'une coupe d'un non-tissé existant en strates illustrant un exemple de répartition du liant.

L'utilisation de charges adaptées en tailles et en nature, et éventuellement en forme, densité et propriétés spécifiques, permet d'augmenter ce rendement par diminution du taux de liant ou par amélioration de la fonction de renforcement du fait d'une meilleure synergie avec les supports introduits ou d'un nombre plus important de points d'ancrage.

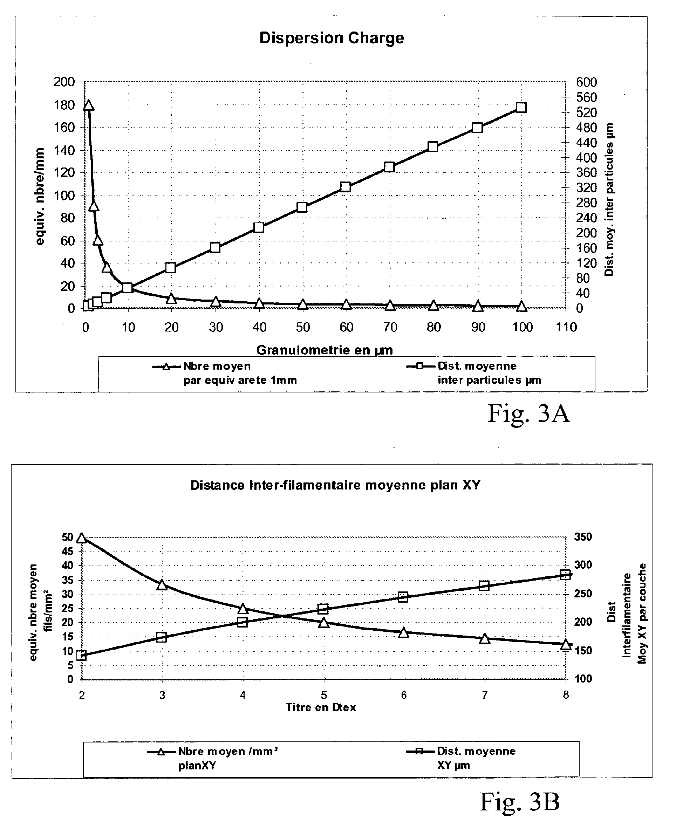

Les tableaux ci-après illustrent, en relation avec les courbes de la figure 3A (dispersion de la charge) et de la figure 3B (distance interfilamentaire moyenne), une simulation de distribution idéalisée de charges minérales de différentes granulométries pour un taux de 15 g de charge par $m^2$ et pour une densité des particules minérales de 2,2 (masse volumique).

Tableaux 1A :

| | | | |
|---|---|---|---|
| **Masse Vol** | **2,2** | **g/cm3** | |
| **Charge/m²** | **15** | **g/m²** | |

**Charge**

| Taille en μm | volume mm3 | Volume cm3 | poids g/partic | Nbre part/m² Produit | Nbre part/cm² Produit |
|---|---|---|---|---|---|
| 1 | 1,0E-09 | 1,0E-12 | 2,2E-12 | 6,8E+12 | 681 818 182 |
| 2 | 8,0E-09 | 8,0E-12 | 1,8E-11 | 8,5E+11 | 85 227 273 |
| 3 | 2,7E-08 | 2,7E-11 | 5,9E-11 | 2,5E+11 | 25 252 525 |
| 5 | 1,3E-07 | 1,3E-10 | 2,8E-10 | 5,5E+10 | 5 454 545 |
| 10 | 1,0E-06 | 1,0E-09 | 2,2E-09 | 6,8E+09 | 681 818 |
| 20 | 8,0E-06 | 8,0E-09 | 1,8E-08 | 8,5E+08 | 85 227 |
| 30 | 2,7E-05 | 2,7E-08 | 5,9E-08 | 2,5E+08 | 25 253 |
| 40 | 6,4E-05 | 6,4E-08 | 1,4E-07 | 1,1E+08 | 10 653 |
| 50 | 1,3E-04 | 1,3E-07 | 2,8E-07 | 5,5E+07 | 5 455 |
| 60 | 2,2E-04 | 2,2E-07 | 4,8E-07 | 3,2E+07 | 3 157 |
| 70 | 3,4E-04 | 3,4E-07 | 7,5E-07 | 2,0E+07 | 1 988 |
| 80 | 5,1E-04 | 5,1E-07 | 1,1E-06 | 1,3E+07 | 1 332 |
| 90 | 7,3E-04 | 7,3E-07 | 1,6E-06 | 9,4E+06 | 935 |
| 100 | 1,0E-03 | 1,0E-06 | 2,2E-06 | 6,8E+06 | 682 |

| Taille en μm | Nbre part/mm² surface Produit | Nbre part/mm3 Produit | Nbre moyen par equiv arete 1mm | Dist. moyenne inter particules μm |
|---|---|---|---|---|
| 1 | 6 818 182 | 6 818 182 | 179,9 | 6 |
| 2 | 852 273 | 852 273 | 90,6 | 11 |
| 3 | 252 525 | 252 525 | 60,6 | 16 |
| 5 | 54 545 | 54 545 | 36,6 | 27 |
| 10 | 6 818 | 6 818 | 18,4 | 54 |
| 20 | 852 | 852 | 9,3 | 108 |
| 30 | 253 | 253 | 6,2 | 161 |
| 40 | 107 | 107 | 4,7 | 214 |
| 50 | 55 | 55 | 3,7 | 267 |
| 60 | 32 | 32 | 3,1 | 320 |
| 70 | 20 | 20 | 2,7 | 373 |
| 80 | 13 | 13 | 2,3 | 426 |
| 90 | 9 | 9 | 2,1 | 478 |
| 100 | 7 | 7 | 1,9 | 531 |

Tableau 1B :

| | | |
|---|---|---|
| **Grammage** | **100** | **g/m²** |
| **Epaisseur** | **1** | **mm** |

(suite)

| Filaments "cage idéalisée" - xx couches/mm en Z | | | | | | |
|---|---|---|---|---|---|---|
| Titre dTex | Longueur fil km/m² de produit | Longueur fil mm/mm² de produit | Nbre moyen par equiv arete 1mm | Dist. moyenne inter filaments μm | Nbre moyen /mm² planXY | Dist. moyenne XY μm |
| | | Couches en Z | 16 | Nbre/mm épaisseur | | |
| Filaments "cage idéalisée" - xx couches/mm en Z | | | | | | |
| Titre dTex | Longueur fil km/m² de produit | Longueur fil mm/mm² de produit | Nbre moyen par equiv arete 1mm | Dist. moyenne inter filaments μm | Nbre moyen /mm² planXY | Dist. moyenne XY μm |
| | | | | | | |
| 2 | 500 | 500 | 7,8 | 129 | 31,3 | 179 |
| 3 | 333 | 333 | 6,8 | 147 | 20,8 | 219 |
| 4 | 250 | 250 | 6,2 | 162 | 15,6 | 253 |
| 5 | 200 | 200 | 5,7 | 174 | 12,5 | 283 |
| 6 | 167 | 167 | 5,4 | 185 | 10,4 | 310 |
| 7 | 143 | 143 | 5,1 | 194 | 8,9 | 335 |
| 8 | 125 | 125 | 4,9 | 203 | 7,8 | 358 |
| 9 | 111 | 111 | 4,7 | 211 | 6,9 | 379 |
| 10 | 100 | 100 | 4,6 | 219 | 6,3 | 400 |

Les exemples 1 à 4 suivants illustrent différentes variantes de réalisation d'un produit non-tissé selon l'état de la technique (Exemple 1) et selon l'invention (Exemples 2 à 4).

Exemple 1 (sans charges particulaires)

Une surface en filaments continus en polyester de 6,0 dtex a été préparée à deux niveaux de masse surfacique 125 et 155g/m² suivant un procédé dit "spunbond". Elle a fait l'objet d'un renforcement par des fils de verre de 68 Tex introduits au centre de la nappe suivant le procédés décrit par le document FR 88 16711.
Ces surfaces ont ensuite été liées hydrauliquement à une vitesse de 20 m/min., à raison d'une fois par face, à quatre niveaux de pression différents de 130 à 210 bars à l'aide de buses de 130μm de diamètre, les orifices étant séparés de 0,8mm. Ces essais sont numérotés de E1 à E8 dans le tableau 2 ci-après.
Ces surfaces ont été ensuite reprises et imprégnées plein bain à l'aide d'un liant composé de 88 % d'une résine acrylique et de 12 % d'une mélamine en dilution à 70 % à une vitesse de 12m/min. Le liant a été séché puis réticulé à une température de 215°C sur un premier tambour et à 135°C sur un second tambour en série.
Le taux d'emport a été ajusté de telle sorte qu'il varie théoriquement dans un domaine de 12 à 24 % en sec par rapport au poids du non tissé (ces essais sont numérotés E1.1 à E1.1.2 dans les tableaux ci-après).

Tableaux 2 :

| Essai N° | Vitesse | Masse Surfacique Initiale | Pression injecteur HE | Taux de résine | Masse Surf. Finale | Epaisseur |
|---|---|---|---|---|---|---|
| | (m/min) | (g/m²) | (Bar) | % | (g/m²) | (mm) |
| E1 | 20 | 126 | 150 | 0,0 | 126 | 1,09 |
| E2 | 20 | 126 | 130 | 0,0 | 126 | 0,93 |
| E3 | 20 | 123 | 180 | 0,0 | 123 | 1,02 |
| E4 | 20 | 126 | 210 | 0,0 | 126 | 0,94 |
| E5 | 20 | 157 | 130 | 0,0 | 157 | 1,27 |
| E6 | 20 | 158 | 150 | 0,0 | 158 | 1,16 |
| E7 | 20 | 155 | 180 | 0,0 | 155 | 1,15 |
| E8 | 20 | 158 | 200 | 0,0 | 158 | 1,12 |
| E1.1 | 12 | 126 | 150 | 14,9 | 148 | 1,20 |
| E2.1 | 12 | 126 | 130 | 14,9 | 148 | 1,15 |
| E3.1 | 12 | 123 | 180 | 14,9 | 150 | 0,92 |
| E4.1 | 12 | 126 | 210 | 14,9 | 146 | 0,89 |
| E5.1 | 12 | 157 | 130 | 17,4 | 190 | 1,33 |
| E6.1 | 12 | 158 | 150 | 16,0 | 188 | 1,23 |
| E7.1 | 12 | 155 | 180 | 12,6 | 189 | 1,17 |
| E8.1 | 12 | 158 | 200 | 15,5 | 187 | 1,11 |
| E1.1.1 | 12 | 126 | 150 | 18,2 | 153 | 1,10 |
| E1.1.2 | 12 | 126 | 150 | 23,6 | 165 | 1,08 |

| Essai N° | Sens Long. Rupt.Fil. Verre | Sens Long. Allong.Rupt Fil. Verre | Sens Long. Ch. Rupt | SensTransv. Ch. Rupt |
|---|---|---|---|---|
| | N | (%) | N | N |
| E1 | 127 | 2,1 | 527 | 326 |
| E2 | 128 | 1,9 | 525 | 366 |
| E3 | 144 | 2,4 | 575 | 358 |
| E4 | 144 | 2,2 | 480 | 335 |
| E5 | 133 | 2,2 | 645 | 422 |
| E6 | 177 | 2,1 | 673 | 440 |
| E7 | 192 | 1,8 | 712 | 456 |
| E8 | 155 | 2,4 | 740 | 427 |
| E1.1 | 350 | | 599 | 342 |
| E2.1 | 370 | | 609 | 328 |
| E3.1 | 360 | | 600 | 363 |
| E4.1 | 340 | | 590 | 357 |
| E5.1 | 390 | | 778 | 444 |
| E6.1 | 393 | | 778 | 427 |
| E7.1 | 408 | | 746 | 457 |
| E8.1 | 384 | | 763 | 462 |
| E1.1.1 | 311 | | 541 | 347 |
| E1.1.2 | 413 | | 613 | 365 |

| Essai N° | Isotropie SL/ST | Ch. Rupt. Moyenne (SL+ST)/2 | Allongement Rupt. SL | Allongement Rupt. ST |
|---|---|---|---|---|
| | / | N | (%) | (%) |
| E1 | 1,62 | 427 | 52,7 | 70,6 |
| E2 | 1,43 | 446 | 52,5 | 66,4 |
| E3 | 1,61 | 467 | 51 | 63,6 |
| E4 | 1,43 | 408 | 52,3 | 64,3 |
| E5 | 1,53 | 534 | 55,7 | 68 |
| E6 | 1,53 | 557 | 51,8 | 65,1 |
| E7 | 1,56 | 584 | 50,6 | 64,8 |
| E8 | 1,73 | 584 | 53,1 | 64,4 |
| E1.1 | 1,75 | 470,5 | 32,7 | 37,1 |
| E2.1 | 1,86 | 468,5 | 31,5 | 34,3 |
| E3.1 | 1,65 | 481,5 | 32,9 | 37,5 |
| E4.1 | 1,65 | 473,5 | 30,9 | 37,3 |
| E5.1 | 1,75 | 611 | 34,9 | 40,7 |
| E6.1 | 1,82 | 603 | 35,5 | 40,6 |
| E7.1 | 1,63 | 602 | 32,3 | 42,3 |
| E8.1 | 1,65 | 613 | 34,5 | 42 |
| E1.1.1 | 1,56 | 444 | 29,5 | 38,5 |
| E1.1.2 | 1,68 | 489 | 30,2 | 35,4 |

Les résultats des différentes propriétés ont été modélisés par une méthode polynomiale de degré deux afin d'être matérialisés. Il apparaît qu'au-delà de 14 % à 16 % de taux de résine liante les propriétés mécaniques du non tissé n'évoluent pratiquement plus, mettant en évidence une très faible efficacité de la résine, néanmoins nécessaire pour assurée une cohésion suffisante au point de jonction/croisement multi filamentaires du réseau en filament polyester. Il apparaît que près de 50 % de la résine sert principalement à enrober les filaments hors noeuds/croisements du réseau. La multiplication de ces noeuds permet ainsi soit de minimiser le taux de résine, soit d'améliorer les propriétés mécaniques, soit de découpler les propriétés du non tissés en regard du taux d'emport. Une contribution légèrement plus importante du taux de résine apparaît pour les masses surfaciques plus élevées du fait de la multiplication de ces points de croisement. La cohésion avec le renfort en fil de verre reste faible par observation en microscopie électronique.

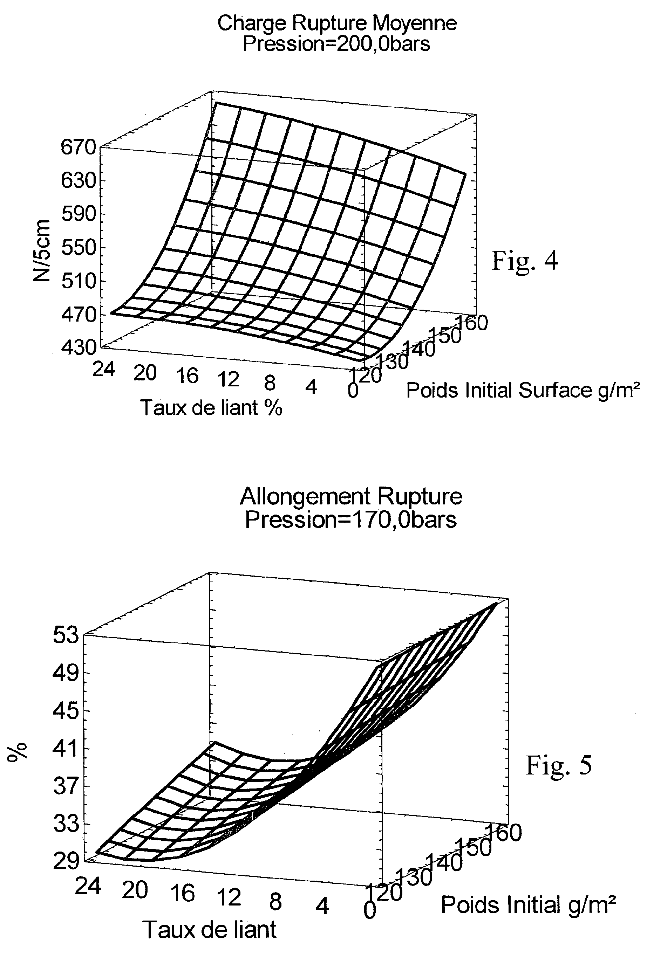

Les figures 4 et 5 des dessins annexés illustrent respectivement la résistance à l'allongement (Fig. 4) et le module d'étirement (Fig. 5).

Exemple 2 : (avec charges particulaires)

Une surface en filaments continus polyester de 7.0 dtex a été préparée suivant un procédé "spunbond" sans renforcement par des supports très hauts modules.

Le polymère utilisé est un PET 100 % recyclé du type « bottle flakes » (paillettes de bouteilles plastiques recyclées) de qualité Q5.

Ces surfaces ont été liées mécaniquement par aiguilletage à raison de :

- 50 perforations/cm$^2$
- 12 mm de pénétration
- à l'aide d'aiguilles 15x18x38 du type « regular barb »

avant d'être thermofixées à 210°C à partir d'une calandre chauffée, puis imprégnées à l'aide d'un mélange variable de carbonate de calcium et du même liant acrylique que l'exemple 1, ceci à une vitesse de 40m/min.

Le liant a été séché puis réticulé à une température de 217°C sur un tambour à air traversant de 3,6 m de diamètre.

Le taux d'emport a été ajusté théoriquement à un niveau variable de 21 % à 27 % en sec par rapport au poids du non tissé.

Ces essais sont numérotés 1 à 6 dans les tableaux 3 et 4 ci-après.

Le carbonate de Calcium est sous la forme d'une boue liquide ("Slurry") Omyalite 60 de d50 % à 1,5 $\mu$m.

Tableau 3 :

| Essai | PET+Résine g/m² | Charge Minérale g/m² | Masse Surfacique g/m² | % Charge | % résine |
|---|---|---|---|---|---|
| 1 | 230 | 16 | 246 | 5,2 | 15,5 |
|   | 232 | 16 | 248 | 5,3 | 16,0 |
| 2 | 234 | 31 | 265 | 10,6 | 15,8 |
|   | 231 | 31 | 262 | 10,2 | 15,3 |
| 3 | 232 | 45 | 277 | 14,8 | 14,8 |
|   | 230 | 45 | 275 | 14,5 | 14,5 |
| 4 | 204 | 38 | 242 | 18,0 | 18,0 |
|   | 204 | 38 | 242 | 18,0 | 18,0 |
| 5 | 225 | 30 | 255 | 12,5 | 18,8 |
|   | 218 | 29 | 247 | 11,7 | 17,5 |
| 6 | 215 | 14 | 229 | 8,1 | 24,2 |
|   | 210 | 14 | 224 | 7,7 | 23,1 |

Tableaux 4 :

| Essai | Epaisseur mm | Densité / | Isotropie Charge Rupt. (SL/ST) / | Charge Rupt Moy (SL+ST) N | Allong.Rupt. Moy. (SL+ST) % |
|---|---|---|---|---|---|
| 1 | 1,45 | 0,170 | 1 | 799 | 32 |
|   | 1,48 | 0,168 | 1,06 | 779 | 30 |
| 2 | 1,38 | 0,192 | 0,98 | 814 | 31 |
|   | 1,43 | 0,183 | 1,1 | 786 | 28 |
| 3 | 1,48 | 0,187 | 1,07 | 799 | 29 |
|   | 1,50 | 0,183 | 1,07 | 791 | 30 |
| 4 | 1,17 | 0,207 | 1,07 | 675 | 34 |
|   | 1,18 | 0,205 | 1,28 | 676 | 32 |
| 5 | 1,31 | 0,195 | 1,01 | 715 | 30 |
|   | 1,28 | 0,193 | 1,18 | 708 | 29 |
| 6 | 1,12 | 0,204 | 1,15 | 674 | 32 |
|   | 1,13 | 0,198 | 1 | 665 | 33 |

| Essai | Retrait Libre à 200°C | | Fluage 200°C sous 80N | |
|---|---|---|---|---|
| | % SL | % ST | % SL | % ST |
| 1 | -0,7 | -0,3 | 1,7 | -2,0 |
| | -0,9 | -0,2 | 1,5 | -2,3 |
| 2 | -1,0 | -0,5 | 1,5 | -2,0 |
| | -0,9 | -0,4 | 1,4 | -1,8 |
| 3 | -1,1 | -0,3 | 1,5 | -1,7 |
| | -1,1 | -0,5 | 1,6 | -1,3 |
| 4 | -1,0 | -0,4 | 2,7 | -2,3 |
| | -1,0 | -0,2 | 2,8 | -2,3 |
| 5 | -1,1 | -0,5 | 2,5 | -2,4 |
| | -1,1 | -0,4 | 2,0 | -2,1 |
| 6 | -1,2 | -0,5 | 2,8 | -2,5 |
| | -1,2 | -0,4 | 2,4 | -2,5 |

Les propriétés mécaniques ont été modélisées par des polynômes du second ordre sur la base respectivement de la masse en g/m$^2$ de l'ensemble non-tissé + résine et de l'apport supplémentaire en filler CaCO$_3$.

La charge rupture apparaît peu sensible au renforcement en charge minérale mais seulement à la masse de non-tissé +résine. Par contre on note une remarquable amélioration du retrait sous contrainte dans le sens transversal. Ce mécanisme s'explique principalement par le renforcement ainsi que par l'augmentation de la taille des points de liages qui contribuent à la diminution de la déformabilité par l'apport en masse de la charge minérale, sans pour autant apporter des points de cohésion supplémentaires du fait de la très faible taille des particules introduites 10 à 15 fois plus petites que le diamètre des filaments. Ceci se vérifie aussi pour la déformation à froid sous 50N.

Le taux d'emport en résine peut être considérablement diminué sans pour autant sensiblement affecter les propriétés mécaniques et la déformabilité à chaud de la surface ainsi réalisée.

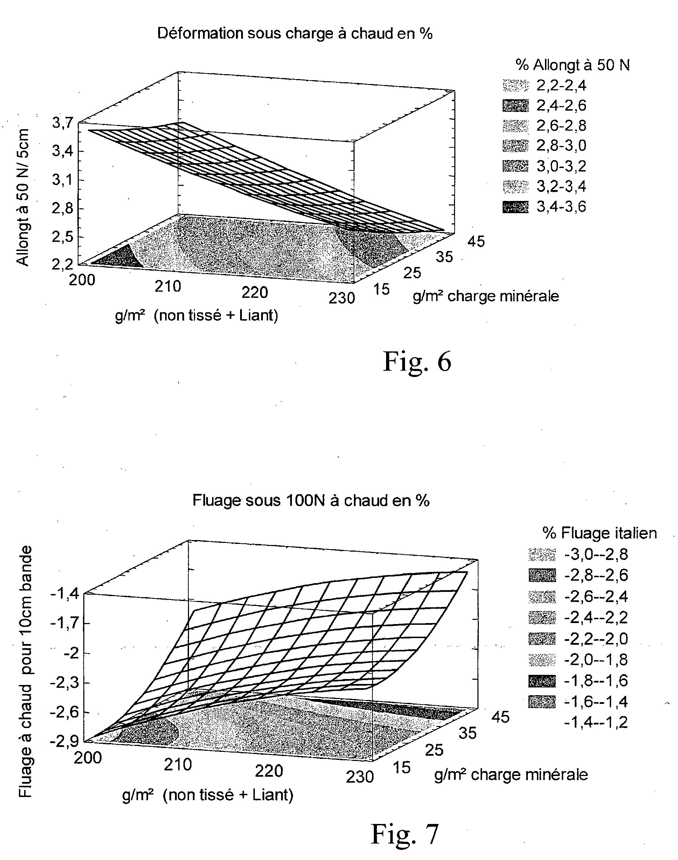

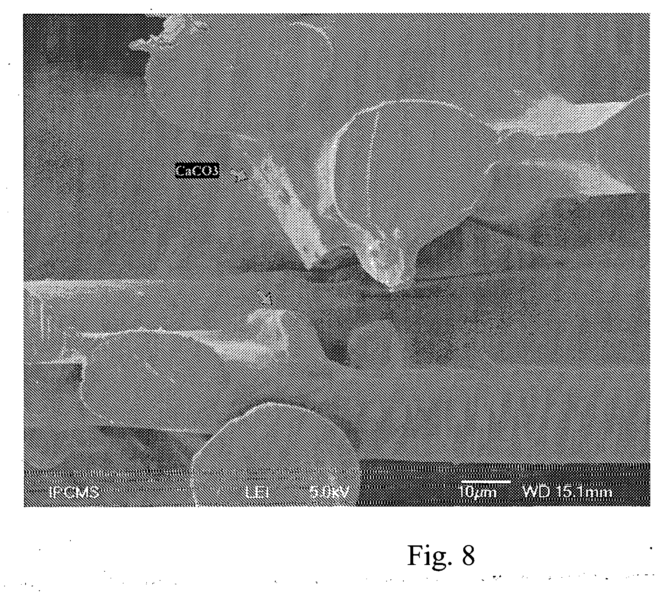

Les figures 6 et 7 illustrent les courbes d'allongement à 50N (fig. 6) et le fluage (fig. 7) des produits non-tissés produits selon l'exemple 2 et la figure 8 est une vue photographique en coupe d'un produit non-tissé en accord avec l'exemple 2.

Exemple 3 :

Une surface en filaments continus de polyester de 7.0 dtex a été préparée dans les mêmes conditions que l'exemple 2 toujours à partir d'un polymère PET 100 % recyclé « bottle flackes » (paillettes de bouteilles recyclées) de qualité Q5.

La liaison par aiguilletage ainsi que la thermo fixation et les conditions d'imprégnation et de séchage/réticulation sont restées similaires à l'exemple précédent.

La masse surfacique de base du non tissé est de 195 g/m$^2$.Le taux d'emport a été ajusté théoriquement à un niveau variable de 21 % à 27 % en sec par rapport au poids du non tissé. Ces essais sont numérotés 1 à 4 dans les tableaux 5 et 6 ci-après.

Les charges inertes introduites suivant les essais consistent en des mélanges de particules déterminés comme indiqué.

Le carbonate de Calcium est une boue liquide (Slurry) Omyalite 60 de d50 % à 1,5 $\mu$m et un Durcal 130 de d50 % à 170 $\mu$m.

La charge en particules de polyester est réalisée à partir de la récupération de fines de coupes de « bottle flakes » (particules de bouteilles recyclées) tamisée dont le spectre de granulométrie se situe entre 2 et 400 $\mu$m.

Afin d'éviter la sédimentation des charges minérales de forte granulométrie, un agent thixotrope de mise en suspension été introduit à hauteur de 0,5 % en sec du taux de résine acrylique.

Les fines solides de polyester ont été au préalable lavées et séchées en présence d'un tensio-actif permettant d'éviter leur ré-agglomération dans le liant.

Tableaux 5 :

| Produit | | BiMoTiXo001 | | BiMoTiXo002 | |
|---|---|---|---|---|---|
| Composition en charge | | 20 g/m² Slurry | | 10+10g/m² Slurry+Durcall | |
| Bobine n° | | 26 | 27 | 28 | 29 |
| Taux Total | (%) | 29 | 27,0 | 34,5 | 34,5 |
| Taux résine | (%) | 19 | 18 | 18 | 18 |
| Masse résine | (g/m²) | 38 | 36 | 36 | 36 |
| Masse charge | (g/m²) | 19 | 18 | 33 | 33 |
| Masse résine+charge | (g/m²) | 57 | 54 | 69 | 69 |
| Masse PET+résine | (g/m²) | 238 | 236 | 236 | 236 |
| Répartition | (g/m²) | 257 | 254 | 269 | 269 |
| Epaisseur | ( mm ) | 1,48 | 1,45 | 1,50 | 1,51 |
| Densité | / | 0,174 | 0,175 | 0,179 | 0,178 |
| Charge rupture SL | ( N ) | 801 | 843 | 816 | 831 |
| Charge rupture ST | ( N ) | 721 | 703 | 741 | 740 |
| Isotropie SL/ST | / | 1,09 | 1,20 | 1,10 | 1,12 |
| Charge L+T/2 | ( N ) | 761 | 773 | 779 | 786 |
| Charge pondérée à 230 g/m² | ( N ) | 737 | 754 | 757 | 764 |
| Allongement SL | ( % ) | 28,5 | 29,9 | 28,2 | 28,2 |
| Allongement ST | ( % ) | 29,6 | 28,9 | 28,3 | 29,1 |

| Produit | | BiMoTiXo003 | | BiMoTiXo004 | |
|---|---|---|---|---|---|
| Composition en charge | | 20 g/m² Durcal | | 12+8 g/m² Slurry+PET | |
| Bobine n° | | 32 | 33 | 34 | 35 |
| Taux Total | (%) | 26,5 | 29,5 | 25,5 | 28,5 |
| Taux résine | (%) | 17 | 19 | 17 | 19 |
| Masse résine | (g/m²) | 35 | 39 | 34 | 38 |
| Masse charge | (g/m²) | 18 | 20 | 17 | 19 |
| Masse résine+charge | (g/m²) | 53 | 59 | 51 | 57 |
| Masse PET+résine | (g/m²) | 235 | 239 | 234 | 238 |
| Répartition | (g/m²) | 253 | 259 | 251 | 257 |
| Epaisseur | ( mm ) | 1,52 | 1,54 | 1,50 | 1,52 |
| Densité | / | 0,166 | 0,168 | 0,167 | 0,169 |
| Charge rupture SL | ( N ) | 805 | 814 | 788 | 801 |
| Charge rupture ST | ( N ) | 717 | 739 | 712 | 730 |
| Isotropie SL/ST | / | 1,12 | 1,10 | 1,11 | 1,10 |
| Charge L+T/2 | ( N ) | 761 | 777 | 750 | 766 |
| Charge pondérée à 230 g/m² | ( N ) | 745 | 747 | 738 | 741 |
| Allongement SL | ( % ) | 28,0 | 27,5 | 28,0 | 26,6 |
| Allongement ST | ( % ) | 28,1 | 30,3 | 26,3 | 27,7 |

EP 2 366 822 B1

| Produit | | 230 THC | |
|---|---|---|---|
| Composition en charge | | / | |
| Bobine n° | | 16 | 17 |
| Taux Total | (%) | 21,0 | 23,0 |
| Taux résine | (%) | 21 | 23 |
| Masse résine | (g/m²) | 42 | 46 |
| Masse charge | (g/m²) | 0 | 0 |
| Masse résine+charge | (g/m²) | 42 | 46 |
| Masse PET+résine | (g/m²) | 242 | 246 |
| Répartition | (g/m²) | 242 | 246 |
| Epaisseur | ( mm ) | 1,43 | 1,46 |
| Densité | / | 0,169 | 0,168 |
| Charge rupture SL | ( N ) | 802 | 822 |
| Charge rupture ST | ( N ) | 750 | 756 |
| Isotropie SL/ST | / | 1,07 | 1,09 |
| Charge L+T/2 | ( N ) | 776 | 789 |
| Charge pondérée à 230 g/m² | ( N ) | 738 | 738 |
| Allongement SL | ( % ) | 31,2 | 30,3 |
| Allongement ST | ( % ) | 32,6 | 31,9 |

## Tableaux 6 :

**Dynamométries à chaud 200 °C pondérées à 230 g/m²**

| Produit | | BiMoTiXo001 | | BiMoTiXo002 | |
|---|---|---|---|---|---|
| Composition en charge | | 20 g/m² Slurry | | 10+10g/m² Slurry+Durcall | |
| Bobine n° | | 26 | 27 | 28 | 29 |
| Masse PET+résine | (g/m²) | **238** | **236** | **236** | **236** |
| Allongement à 10 N SL | ( % ) | 0,72 | 0,66 | 0,68 | 0,63 |
| Allongement à 50 N SL | ( % ) | 3,6 | 3,3 | 3,4 | 3,2 |
| Allongement à 80 N SL | ( % ) | 6,0 | 5,5 | 5,7 | 5,3 |
| Allongement à 100 N SL | ( % ) | 7,8 | 6,9 | 7,1 | 6,5 |

| Produit | | | BiMoTiXo003 | | BiMoTiXo004 | |
|---|---|---|---|---|---|---|
| Composition en charge | | | 20 g/m² Durcal | | 12+8 g/m² Slurry+PET | |
| Bobine n° | | | 32 | 33 | 34 | 35 |
| Masse PET+résine | | (g/m²) | 235 | 239 | 234 | 238 |
| Allongement à 10 N | SL | ( % ) | 0,63 | 0,64 | 0,66 | 0,63 |
| Allongement à 50 N | SL | ( % ) | 3,2 | 3,2 | 3,3 | 3,2 |
| Allongement à 80 N | SL | ( % ) | 5,2 | 5,4 | 5,5 | 5,2 |
| Allongement à 100 N | SL | ( % ) | 6,5 | 6,6 | 6,9 | 6,5 |

| Produit | | | 230 THC | |
|---|---|---|---|---|
| Composition en charge | | | / | |
| Bobine n° | | | 16 | 17 |
| Masse PET+résine | | (g/m²) | 242 | 246 |
| Allongement à 10 N | SL | ( % ) | 0,68 | 0,67 |
| Allongement à 50 N | SL | ( % ) | 3,4 | 3,3 |
| Allongement à 80 N | SL | ( % ) | 5,7 | 5,6 |
| Allongement à 100 N | SL | ( % ) | 7,1 | 6,8 |

Il apparait que l'introduction de charges minérales ou polymériques permet de diminuer le taux d'emport en résine tout en maintenant ou améliorant les propriétés mécaniques ou de stabilité dimensionnelles.

Un mélange de deux granulométries s'avère être supérieure en charge rupture à l'utilisation d'une seule population en faible granulométrie ainsi qu'en comparaison du produit sans charges, et ceci avec des taux d'emport en résine sensiblement plus faibles.

Les pontages en grosses particules dans les plans XY et Z permettent de découpler les propriétés de stabilité à épaisseur augmentée souvent recherchées.

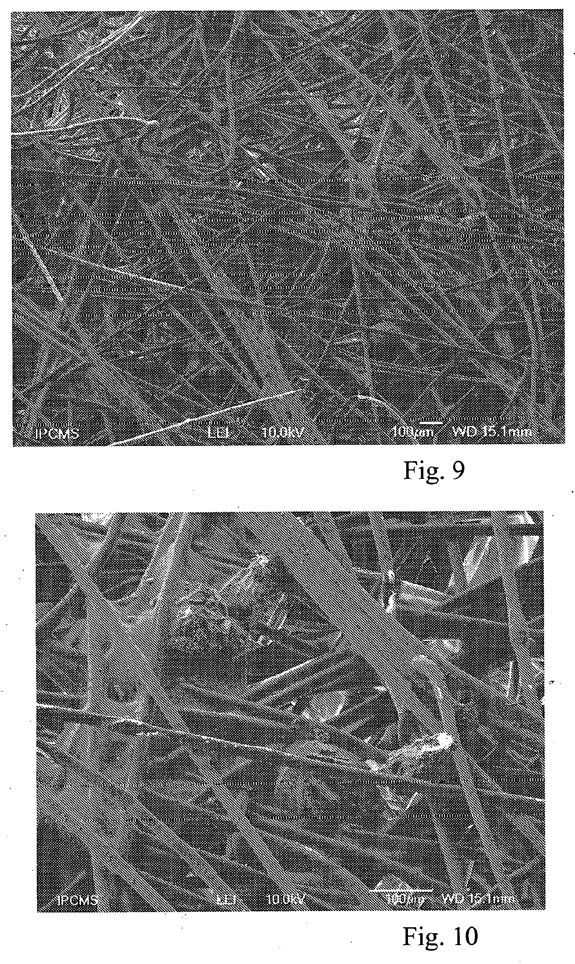

Les figures 9 et 10 sont des vues photographies prises au microscope électronique, avec des grossissements différents, illustrant les pontages obtenus avec les grosses particules et la taille relative de ces dernières par rapport aux filaments et aux pores du non-tissé.

Exemple 4:

Des surfaces de non-tissés composés de fibres courtes de polyester de 6,5 dtex de masses surfaciques de l'ordre 110 g/m² et 120 g/m² ont été préparées selon un procédé par voie sèche. Elles ont fait l'objet d'un renforcement par des fils de verre de 68 Tex introduits au centre de la nappe suivant les procédés décrits par document FR 88 16711.

Plusieurs échantillons de ces surfaces ont été ensuite repris et imprégnés plein bain à l'aide d'un liant composé de 70 % d'une résine acrylique et de 30 % d'une mélamine en dilution dans l'eau à 77,5 % à une vitesse de 2,5 m/min. Le liant a été séché puis réticulé dans un four à une température de 215°C pendant 3 minutes.

Le taux d'emport a été ajusté de telle sorte qu'il se situe théoriquement dans un domaine de 22 à 24 % en sec par rapport au poids initial du non tissé. L'exprimage est réalisé par un foulard à 3,5 bars de pression de serrage pour l'ensemble des essais.

En essais comparatifs, ce même liant a fait l'objet de l'ajout de 25 % en sec de la résine d'une charge particulaire sous forme de Carbonate de Calcium de granulométrie moyenne d50 % à 130 $\mu$m ou de polyéthylène micronisé de granulométrie de 100 $\mu$m à 300 $\mu$m.

Le traitement de ces essais comparatifs est similaire au témoin sans charge additionnelle.

Le comportement longitudinal de la surface finale a été testé à froid et à chaud à une température de 180°C.

Les résultats obtenus par ces essais figurent dans les tableaux 7 et 8 suivants :

Tableau 7 :

| Tests à froid | | Témoin | Carb Calc | PE micro |
|---|---|---|---|---|
| Masse surfacique | g/m2 | 147 | 138 | 140 |
| Epaisseur | mm | 1,67 | 1,46 | 1,46 |
| Densité | / | 0,088 | 0,094 | 0,096 |
| Charge Rupture - Fils de verre - SL | N/50mm | 387 | 371 | 358 |
| Allongement Rupture - Fils de verre- SL | % | 3,5 | 3,2 | 3,3 |
| Charge / 2% élongation - SL | N/50mm | 216 | 240 | 227 |
| Ténacité Normée | daN/50mm/gm2 | 0,26 | 0,27 | 0,26 |
| Charge rupture SL | N/50mm | 189 | 177 | 190 |
| Allongement rupture - SL | % | 20,0 | 21,9 | 21,1 |
| Energie rupture - SL | J/mm3 | 0,41 | 0,48 | 0,49 |
| Module de Young E | MPa | 151 | 172 | 169 |

Tableau 8 :

| Tests à Chaud 180°C | | Témoin | Carb Calc | PE micro |
|---|---|---|---|---|
| Masse surfacique | g/m2 | 141 | 140 | 133 |
| Charge Rupture - Fils de verre - SL | N/50mm | 95 | 80 | 89 |
| Allongement Rupture - Fils de verre- SL | % | 2,2 | 2,0 | 2,2 |
| Déformation @ 50 N | % | 1,11 | 1,05 | 1,16 |
| Déformation @ 80 N | % | 1,69 | 1,83 | 1,86 |
| Ténacité Normée | daN/50mm/gm2 | 0,07 | 0,06 | 0,07 |
| Charge rupture SL | N/50mm | 67 | 68 | 73 |
| Allongement rupture - SL | % | 95,5 | 92,6 | 65,5 |
| Module de Young E | MPa | 62 | 63 | 64 |

On note une excellente synergie des charges minérales ou organiques avec les filaments de verre de renforcement, ainsi qu'une amélioration sensible du module tant à froid que sous 180°C par rapport au témoin.

Malgré une masse surfacique plus faible pour les produits chargés, l'énergie de rupture et la déformabilité apparaissent comme identiques, voire meilleures.

De surcroît, pour les mêmes conditions opératoires, les charges introduites permettent d'obtenir une épaisseur du produit plus faible liée à une moindre relaxation du réseau. Les charges de polyéthylène permettent d'emprisonner ponctuellement de nombreux filaments modifiant ainsi très sensiblement le comportement mécanique en déformation à chaud du réseau fibreux malgré leur introduction dans un liant réticulable.

Ces charges permettent aussi de découpler les propriétés physico-mécaniques de la structure du non-tissé, sans pour autant perdre en stabilité dimensionnelle dans les domaines recherchés.

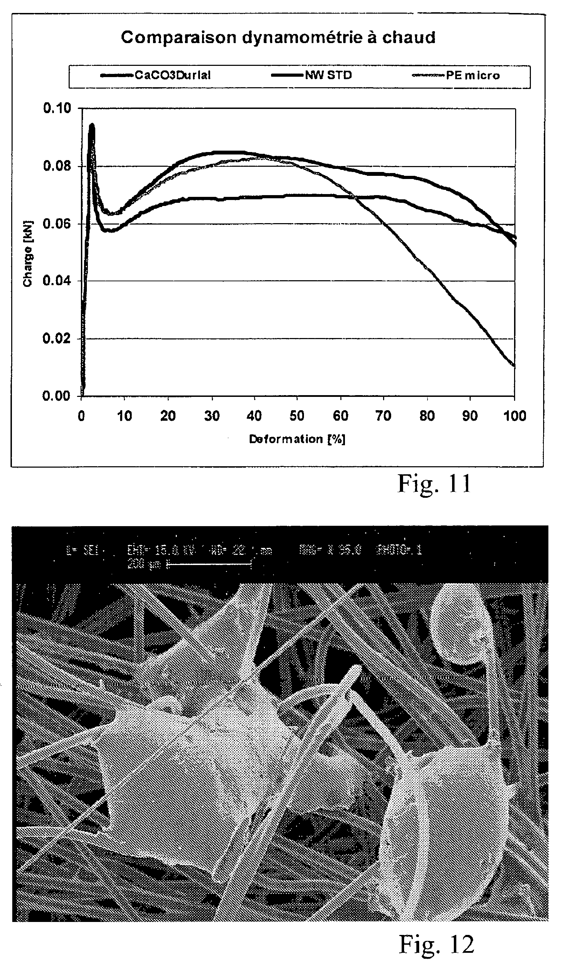

La figure 11 représente sous forme de courbes les résultats des essais de dynamométrie à chaud (courbes déformation / charge) ressortant également du tableau 8 et la figure 12 est une vue photographique au microscope électronique d'un échantillon selon l'exemple 4 illustrant les sites de pontage résultant de la présence des grosses particules (charges polyéthylène + liant acrylique après réticulation).

**Revendications**

1.  Produit non-tissé souple, de densité inférieure à 1 et formé d'au moins deux couches de fibres ou de filaments synthétiques superposées dans la direction Z perpendiculaire au plan XY dudit produit, ayant subi au moins une opération d'aiguilletage mécanique ou hydraulique, ledit produit non-tissé intégrant en outre des charges particulaires sous forme de particules minérales et/ou organiques distribuées de manière monomodale ou multimodale dans ce produit et au moins partiellement enrobées ou encapsulées par un matériau liant apte à relier au moins ponctuellement les filaments ou fibres entre eux (elles),

produit non tissé **caractérisé en ce qu'**au moins une population ou fraction des particules organiques et/ou minérales, dites "grosses particules", présente une taille telle que :

$$3 \text{ x } (\sqrt{SMf})^3 \leq v, \text{ préférentiellement } 5 \text{ x } (\sqrt{SMf})^3 \leq v,$$

où SMf correspond à la section moyenne des fibres ou filaments formant les couches du produit non-tissé et v représente le volume individuel moyen des particules organiques ou minérales.

2. Produit non-tissé selon la revendication 1, **caractérisé en ce que** les grosses particules constituent la fraction majoritaire, en termes de masse et/ou de volume, des charges particulaires présentes dans le produit non-tissé et réalisent des pontages ou des connexions entre les noeuds, mailles, fibres et filaments d'une même couche et entre les couches superposées formant le produit non-tissé.

3. Produit non-tissé selon la revendication 1 ou 2, **caractérisé en ce que** les grosses particules présentent au moins une dimension d telle que d ≥ 3 x DMf, préférentiellement d ≥ 5 x DMf, où DMf correspond au diamètre moyen des fibres ou filaments formant les couches du produit non-tissé.

4. Produit non-tissé selon l'une quelconque des revendications 1 à 3, **caractérisé en ce que** les grosses particules présentent une taille moyenne correspondant à au moins 20 % de la taille moyenne des pores apparents des couches du produit non-tissé vues selon la direction Z perpendiculaire au plan XY du produit non-tissé.

5. Produit non-tissé selon l'une quelconque des revendications 1 à 4, **caractérisé en ce que** les grosses particules présentent une granulométrie moyenne qui est supérieure à environ 50 $\mu$m, préférentiellement supérieure à environ 60 $\mu$m.

6. Produit non-tissé selon l'une quelconque des revendications 1 à 5, **caractérisé en ce que** le volume individuel v des grosses particules vérifie en outre l'inéquation suivante : $v \leq 50 \text{ x } (\sqrt{SMf})^3$, préférentiellement $v \leq 30 \text{ x } (\sqrt{SMf})^3$.

7. Produit non-tissé selon l'une quelconque des revendications 1 à 6, **caractérisé en ce que** les grosses particules présentent une taille moyenne inférieure à environ 120 %, préférentiellement à environ 100 %, de la taille moyenne des pores apparents des couches du produit non-tissé vues selon la direction Z perpendiculaire au plan XY dudit produit.

8. Produit non-tissé selon l'une quelconque des revendications 1 à 7, **caractérisé en ce que** les grosses particules font état d'une granulométrie moyenne inférieure à environ 400 $\mu$m, avantageusement à environ 300 $\mu$m, préférentiellement à environ 200 $\mu$m.

9. Produit non-tissé selon l'une quelconque des revendications 1 à 8, **caractérisé en ce que** les charges particulaires minérales et/ou organiques comprennent également une population ou fraction de particules dont la granulométrie est inférieure à 30 $\mu$m, préférentiellement à 20 $\mu$m.

10. Produit non-tissé selon l'une quelconque des revendications 1 à 9, **caractérisé en ce que** les charges minérales et/ou organiques sont présentes avec un taux pondéral compris entre 1 % et 30 %, préférentiellement entre 5 % et 25 %, du poids des fibres ou filaments formant les couches du produit non-tissé.

11. Produit non-tissé selon l'une quelconque des revendications 1 à 10, **caractérisé en ce que** le ou les matériau(x) formant les particules minérales et/ou organiques a (ont) une température de fusion supérieure à celle du ou des matériaux formant les fibres ou filaments des couches, le cas échéant à la température de fusion d'activation, de réticulation ou de séchage du liant.

12. Produit non-tissé selon l'une quelconque des revendications 1 à 10, **caractérisé en ce que** la température de fusion des particules organiques est inférieure à celle des fibres ou filaments et, selon le cas, inférieure ou supérieure à la température de thermofixation, de séchage, d'activation ou de réticulation du matériau formant le liant.

13. Produit non-tissé selon l'une quelconque des revendications 1 à 12, **caractérisé en ce que** les particules formant les charges présentant une granulométrie supérieure à 100 $\mu$m, avantageusement supérieure à 60 $\mu$m, préférentiellement supérieure à 20 $\mu$m, sont de nature ou d'origine organique.

14. Produit non-tissé selon l'une quelconque des revendications 1 à 13, **caractérisé en ce qu'**une partie des particules formant les charges minérales et/ou organiques consistent en des particules expansibles avec la température.

15. Produit non-tissé selon l'une quelconque des revendications 1 à 10, **caractérisé en ce que** les fibres ou filaments continus formant les couches du produit non-tissé sont à base d'un matériau polymère thermoplastique choisi dans le groupe formé par les polypropylènes, les polyesters, les polyamides, les polyéthylènes, ainsi que les copolymères de ces différents polymères et les mélanges possibles de ces différents polymères et copolymères.

16. Produit non-tissé selon l'une quelconque des revendications 1 à 15, **caractérisé en ce qu'**il intègre, éventuellement au niveau de ou entre deux ou plusieurs couches constitutives, des structures de renfort sous forme de filaments, de grille(s) et/ou de textile à caractéristiques de stabilisation élevés, les particules minérales et/ou organiques au moins partiellement enrobées ou encapsulées par le liant établissant des liaisons rigides ou réalisant des pontages entre ces structures de renfort et les filaments ou fibres des couches par l'intermédiaire dudit liant.

17. Produit non-tissé selon l'une quelconque des revendications 1 à 16, **caractérisé en ce que** le matériau formant les particules minérales est choisi dans le groupe formé par les carbonates, les silicates et les sulfates tels que le carbonate de calcium, l'hydroxyde de magnésium ou d'aluminium, le sulfate de baryum, l'argile, le kaolin, le quartz, le talc et les oxydes et les hydroxydes tels que l'oxyde de titane, la bauxite, la gibbsite.

18. Produit non-tissé selon l'une quelconque des revendications 1 à 17, **caractérisé en ce que** le matériau formant les particules organiques est choisi dans le groupe formé par les celluloses, fibreuses ou particulaires, tels que le bois, la lignine, les graphites, les polymères recyclés thermodurcissables micronisés, tels que l'époxy et la bakélite, les polymères thermoplastiques micronisés, tels que le polyéthylène téréphtalate, le polybutylène téréphtalate, le polypropylène, le polyéthylène, le polyamide, ainsi que leurs copolymères.

19. Produit non-tissé selon l'une quelconque des revendications 1 à 18, **caractérisé en ce que** le matériau formant le liant est choisi dans le groupe formé par les résines avec ou sans formaldéhyde, les résines liquides, en émulsion ou en dispersion à base d'acrylate, de styrol-acrylate, de vinyl-acétate, de méthacrylate, de vinyl-acrylate, d'acrylamides, de méthyl-acryl-amides, d'éthyl-vinyl-acétate, de styrol-butadiène, de vinyl-alcool, de butadiène-acrylate, de polyuréthane, de silicone, les résines réticulantes, à base de phénol, de mélamine, d'urée, d'époxy, d'alkyde, de polyester.

20. Procédé de fabrication d'un produit non-tissé souple, de densité inférieure à 1 et formé d'au moins deux couches de fibres ou de filaments superposées dans la direction Z perpendiculaire au plan XY dudit produit, ayant subi au moins une opération d'aiguilletage mécanique ou hydraulique, ledit produit non-tissé intégrant en outre des charges particulaires sous forme de particules minérales et/ou organiques distribuées de manière monomodale ou multimodale dans ce produit et au moins partiellement enrobées ou encapsulées par un matériau liant apte à relier au moins ponctuellement les filaments ou fibres entre eux (elles),

procédé **caractérisé en ce qu'**il consiste à réaliser, préalablement, simultanément ou postérieurement à l'intégration du matériau liant dans et/ou entre les couches de fibres ou de filaments, une étape d'incorporation de charges particulaires minérales et/ou organiques comprenant au moins une population ou fraction des particules organiques et/ou minérales, dites "grosses particules", présente un volume individuel tel que $3 \text{ x } \left( \sqrt{SMf} \right)^3 \leq v$, préférentiellement $5 \text{ x } \left( \sqrt{SMf} \right)^3 \leq v$, où SMf correspond à la section moyenne des fibres ou filaments formant les couches du produit non-tissé et v représente le volume individuel moyen des particules organiques ou minérales.

21. Procédé de fabrication selon la revendication 20, **caractérisé en ce que** les grosses particules incorporées dans le produit non-tissé correspondent à des particules selon l'une quelconque des revendications 2 à 8, l'opération d'aiguilletage étant effectuée avant ou après l'introduction des charges particulaires dans et entre les couches du produit non-tissé.

**22.** Procédé de fabrication selon l'une quelconque des revendications 20 et 21, **caractérisé en ce que** les charges particulaires minérales et/ou organiques incorporées comprennent également une population ou fraction de particules dont la granulométrie est inférieure à 30 μm, préférentiellement à 20 μm.

**23.** Procédé de fabrication selon l'une quelconque des revendications 18 à 21, **caractérisé en ce qu'**il consiste à incorporer les charges minérales et/ou organiques dans le produit non-tissé avec un taux pondéral compris entre 1 % et 30 %, préférentiellement entre 5 % et 25 %, du poids des fibres ou filaments formant les couches du produit non-tissé.

**24.** Procédé de fabrication selon l'une quelconque des revendications 1 à 22, **caractérisé en ce que** l'ensemble des particules minérales et/ou organiques est incorporé simultanément dans le produit non tissé, préalablement ou simultanément avec le liant chimique.

**25.** Procédé de fabrication selon l'une quelconque des revendications 1 à 22, **caractérisé en ce que** les particules minérales et les particules organiques sont incorporées de manière différenciée dans le produit non-tissé, les particules minérales étant introduites postérieurement aux particules organiques.

**26.** Procédé de fabrication selon l'une quelconque des revendications 20 à 25, **caractérisé en ce que** le ou les matériau(x) formant les particules minérales et/ou organiques a (ont) une température de fusion supérieure à celle du ou des matériaux formant les fibres ou filaments des couches, le cas échéant à la température de fusion, d'activation, de réticulation ou de séchage du liant.

**27.** Procédé de fabrication selon l'une quelconque des revendications 20 à 25, **caractérisé en ce que** la température de fusion des particules organiques est inférieure à celle des fibres ou filaments et, selon le cas, inférieure ou supérieure à la température de thermofixation, de séchage, d'activation ou de réticulation du matériau formant le liant.

**28.** Procédé de fabrication selon l'une quelconque des revendications 20 à 27, **caractérisé en ce que** les particules présentant une granulométrie supérieure à 100 μm, avantageusement supérieure à 60 μm, préférentiellement supérieure à 20 μm sont de nature ou d'origine organique, **en ce qu'**une partie des particules formant les charges minérales et/ou organiques consistent en des particules expansibles avec la température et **en ce que** les fibres ou filaments continus formant les couches du produit non-tissé sont à base d'un matériau polymère thermoplastique choisi dans le groupe formé par les polypropylènes, les polyesters, les polyamides, les polyéthylènes, ainsi que les copolymères de ces différents polymères et les mélanges possibles de ces différents polymères et copolymères.

**29.** Procédé de fabrication selon l'une quelconque des revendications 20 à 28, **caractérisé en ce qu'**il consiste à utiliser un agent thixotrope ou dispersant, dans le cas d'une introduction des charges particulaires et du liant par imprégnation, lorsque la densité des particules est supérieure d'environ 30 %, préférentiellement d'environ 20 %, à celle du liant.

**30.** Procédé de fabrication selon l'une quelconque des revendications 20 à 29, **caractérisé en ce qu'**il consiste à intégrer dans le produit non-tissé, éventuellement au niveau de ou entre deux ou plusieurs couches constitutives, des structures de renfort sous forme de filaments, de grille(s) et/ou de textile à caractéristiques de stabilisation élevés, les particules minérales et/ou organiques au moins partiellement enrobées ou encapsulées par le liant établissant des liaisons rigides ou réalisant des pontages entre ces structures de renfort et les filaments ou fibres des couches par l'intermédiaire dudit liant.

**Patentansprüche**

**1.** Geschmeidiges Vliesstoffprodukt einer Dichte kleiner als 1 und gebildet aus mindestens zwei Schichten synthetischer Fasern oder Filamente, die in der zur XY-Ebene des genannten Produkts senkrechten Z-Richtung übereinander liegen und die mindestens einer mechanischen oder hydraulischen Nadelung unterworfen wurden, wobei das genannte Vliesstoffprodukt außerdem Partikelfüllungen in Form anorganischer und/oder organischer Partikel enthält, die monomodal oder multimodal in diesem Produkt verteilt und mindestens teilweise mit einem Bindemittel eingehüllt oder eingekapselt sind, das geeignet ist, mindestens punktweise die Filamente oder Fasern miteinander zu verbinden,
Vliesstoffprodukt, **dadurch gekennzeichnet, dass** mindestens eine Population oder ein Anteil der organischen und/oder anorganischen Partikel, so genannte "große Partikel", eine Größe aufweist, so dass gilt:

$$3 \times \left(\sqrt{SMf}\right)^3 \leq v \, , \text{ vorzugsweise } 5 \times \left(\sqrt{SMf}\right)^3 \leq v \, ,$$

worin SMf der mittlere Querschnitt der Fasern oder Filamente ist, die die Schichten des Vliesstoffprodukts bilden, und v das mittlere individuelle Volumen der organischen oder anorganischen Partikel.

2. Vliesstoff nach Patentanspruch 1, **dadurch gekennzeichnet, dass** die großen Partikel den überwiegenden Anteil der Partikelfüllstoffe im Vliesstoff hinsichtlich der Masse und/oder des Volumens darstellen und Brücken oder Verbindungen zwischen den Knoten, Maschen, Fasern und Filamenten einer Schicht und zwischen den übereinander liegenden Schichten, die das Vliesstoffprodukt bilden, herstellen.

3. Vliesstoffprodukt nach Patentanspruch 1 oder 2, **dadurch gekennzeichnet, dass** die großen Partikel mindestens eine Abmessung d aufweisen, so dass d $\geq$ 3 x DMf, vorzugsweise d $\geq$ 5 x DMf, gilt, worin DMf der mittlere Durchmesser der Fasern oder Filamente ist, die die Schichten des Vliesstoffprodukts bilden.

4. Vliesstoffprodukt nach einem der Patentansprüche 1 bis 3, **dadurch gekennzeichnet, dass** die großen Partikel eine mittlere Größe aufweisen, die mindestens 20% der mittleren Größe der sichtbaren Poren der Schichten des Vliesstoffes in der zur XY-Ebene des Vliesstoffprodukts senkrechten Z-Richtung entspricht.

5. Vliesstoffprodukt nach einem der Patentansprüche 1 bis 4, **dadurch gekennzeichnet, dass** die großen Partikel eine mittlere Korngröße aufweisen, die größer ist als ungefähr 50 $\mu$m, vorzugsweise größer als ungefähr 60 $\mu$m.

6. Vliesstoffprodukt nach einem der Patentansprüche 1 bis 5, **dadurch gekennzeichnet, dass** das individuelle Volumen v der großen Partikel außerdem die folgende Ungleichung erfüllen: $v \leq 50 \times \left(\sqrt{SMf}\right)^3$, vorzugsweise

$$v \leq 30 \times \left(\sqrt{SMf}\right)^3 .$$

7. Vliesstoffprodukt nach einem der Patentansprüche 1 bis 6, **dadurch gekennzeichnet, dass** die großen Partikel eine mittlere Größe aufweisen, die niedriger ist, als ungefähr 120%, vorzugsweise als ungefähr 100%, der mittleren Größe der sichtbaren Poren der Schichten des Vliesstoffprodukts, in der zur XY-Ebene des genannten Stoffes senkrechten Z-Richtung gesehen.

8. Vliesstoffprodukt nach einem der Patentansprüche 1 bis 7, **dadurch gekennzeichnet, dass** die großen Partikel eine mittlere Korngröße von weniger als ungefähr 400 $\mu$m, vorteilhafterweise von weniger als ungefähr 300 $\mu$m und vorzugsweise von weniger als ungefähr 200 $\mu$m aufweisen.

9. Vliesstoffprodukt nach einem der Patentansprüche 1 bis 8, **dadurch gekennzeichnet, dass** die anorganischen und/oder organischen Partikelfüllstoffe ebenfalls eine Partikelpopulation oder einen Partikelanteil enthalten, deren Korngröße niedriger ist als 30 $\mu$m, vorzugsweise als 20 $\mu$m.

10. Vliesstoffprodukt nach einem der Patentansprüche 1 bis 9, **dadurch gekennzeichnet, dass** die anorganischen und/oder organischen Füllstoffe in einem Gewichtsanteil vorliegen, der zwischen 1% und 30%, vorzugsweise zwischen 5% und 25%, des Gewichts der Fasern oder Filamente ausmacht, die die Schichten des Vliesstoffprodukts bilden.

11. Vliesstoffprodukt nach einem der Patentansprüche 1 bis 10, **dadurch gekennzeichnet, dass** der oder die Stoff(e), aus dem/denen die anorganischen und/oder organischen Partikel bestehen, eine Schmelztemperatur aufweist/aufweisen, die höher liegt, als die des oder der Stoff(e), der/die die Fasern oder Filamente der Schichten bilden und gegebenenfalls höher als die Schmelz-, Aktivierungs- Vernetzungs- oder Trocknungstemperatur des Bindemittels.

12. Vliesstoffprodukt nach irgendeinem der Patentansprüche 1 bis 10, **dadurch gekennzeichnet, dass** die Schmelztemperatur der organischen Partikel niedriger ist als die der Fasern oder Filamente und je nach Fall niedriger oder höher, als die Temperatur der Thermofixierung, der Trocknung, der Aktivierung oder der Vernetzung des Stoffes, der das Bindemittel bildet.

13. Vliesstoffprodukt nach einem der Patentansprüche 1 bis 12, **dadurch gekennzeichnet, dass** die die Füllstoffe bildenden Partikel, die eine Korngröße größer als 100 μm, vorteilhafterweise größer als 60 μm und vorzugsweise größer als ungefähr 20 μm aufweisen, organischer Beschaffenheit oder organischen Ursprungs sind.

14. Vliesstoffprodukt nach einem der Patentansprüche 1 bis 13, **dadurch gekennzeichnet, dass** ein Teil der die anorganischen und/oder organischen Füllstoffe bildenden Partikel aus durch die Temperatur expandierbaren Partikeln bestehen.

15. Vliesstoffprodukt nach einem der Patentansprüche 1 bis 10, **dadurch gekennzeichnet, dass** die Endlosfasern oder -filamente, die die Schichten des Vliesstoffes bilden, aus einem thermoplastischen Polymer bestehen, das aus der Gruppe, die aus den Polypropylenen, Polyestern, Polyamiden, Polyethylenen, sowie den Copolymeren dieser Polymere und den möglichen Gemischen dieser Polymere und Copolymere besteht, ausgewählt ist.

16. Vliesstoffprodukt nach einem der Patentansprüche 1 bis 15, **dadurch gekennzeichnet, dass** er, gegebenenfalls im Bereich von oder zwischen zwei oder mehreren seiner Schichten, Verstärkungsstrukturen in Form von Filamenten, Gitter(n) und/oder Textilmaterial mit hohen Stabilisierungseigenschaften enthält, wobei die mindestens teilweise von dem Bindemittel eingehüllten oder eingekapselten anorganischen und/oder organischen Partikel zwischen diesen Verstärkungsstrukturen und den Filamenten oder Fasern der Schichten mit Hilfe des genannten Bindemittels starre Verbindungen herstellen oder Brücken bilden.

17. Vliesstoffprodukt nach einem der Patentansprüche 1 bis 16, **dadurch gekennzeichnet, dass** das Material, aus dem die anorganischen Partikel bestehen, aus der Gruppe bestehend aus Karbonaten, Silikaten und Sulfaten, wie etwa Kalziumkarbonat, Magnesium- oder Aluminiumhydroxid, Bariumsulfat, Ton, Kaolin, Quarz, Talcum und Oxiden und Hydroxiden, wie etwa Titanoxid, Bauxit, Gibbsit, gewählt sind.

18. Vliesstoffprodukt nach einem der Patentansprüche 1 bis 17, **dadurch gekennzeichnet, dass** das Material, das die organischen Partikel bildet, aus der Gruppe bestehend aus faserigen oder aus Teilchen bestehenden Zellulosen, wie etwa Holz, Lignin, aus Graphiten, wiederaufbereiteten, warmhärtenden, mikronisierten Polymeren, wie etwa Epoxid und Bakelit, mikronisierten thermoplastischen Polymeren, wie etwa Polyethylenterephthalat, Polybutylenterephthalat, Polypropylen, Polyethylen, Polyamid, sowie ihren Copolymeren, ausgewählt ist.

19. Vliesstoffprodukt nach einem der Patentansprüche 1 bis 18, **dadurch gekennzeichnet, dass** das Material, das das Bindemittel bildet, aus der Gruppe bestehend aus Harzen mit oder ohne Formaldehyd, flüssigen, emulgierten oder dispergierten Harzen auf der Basis von Acrylat, Styrolacrylat, Vinylazetat, Methacrylat, Vinylacrylat, Acrylamiden, Methylacrylamiden, Ethylvinylazetat, Styrolbutadien, Vinylalkohol, Butadienacrylat, Polyurethan, Silikon, aus vernetzenden Harzen auf der Basis von Phenol, Melamin, Harnstoff, Epoxid, Alkyd, Polyester, gewählt ist.

20. Herstellungsverfahren für ein geschmeidiges Vliesstoffprodukt einer Dichte von weniger als 1 und gebildet aus mindestens zwei Schichten von Fasern oder Filamenten, die in der zur XY-Ebene des genannten Produkts senkrechten Z-Richtung übereinander liegen und die mindestens einer mechanischen oder hydraulischen Nadelung unterworfen wurden, wobei das genannte Vliesstoffprodukt außerdem Partikelfüllungen in Form anorganischer und/oder organischer Partikel enthält, die monomodal oder multimodal in diesem Stoff verteilt und mindestens teilweise mit einem Bindemittel eingehüllt oder eingekapselt sind, das geeignet ist, mindestens punktweise die Filamente oder Fasern miteinander zu verbinden,
Verfahren, **dadurch gekennzeichnet, dass** es darin besteht, vor, gleichzeitig mit oder nach dem Hinzufügen des Bindemittels in und/oder zwischen die Schichten aus Fasern oder Filamenten einen Schritt des Einfügens von anorganischen und/oder organischen Partikelfüllungen auszuführen, die mindestens eine Population oder einen Anteil von organischen und/oder anorganischen Partikel, so genannte "große Partikel", enthalten, die ein individuelles Volumen aufweisen, für das gilt: $3 \times \left( \sqrt{SMf} \right)^3 \leq v$, vorzugsweise $5 \times \left( \sqrt{SMf} \right)^3 \leq v$, worin SMf der mittlere Querschnitt der Fasern oder Filamente ist, die die Schichten des Vliesstoffproduktes bilden, und v für das mittlere individuelle Volumen der organischen oder anorganischen Partikel steht.

21. Herstellungsverfahren nach Patentanspruch 20, **dadurch gekennzeichnet, dass** in das Vliesstoffprodukt eingefügten großen Partikel den Partikeln nach irgendeinem der Patentansprüche 2 bis 8 entsprechen, wobei das Nadeln vor oder nach dem Einfügen der Partikelfüllungen in und zwischen die Schichten des Vliesstoffes erfolgt.

**22.** Herstellungsverfahren nach einem der Patentansprüche 20 und 21, **dadurch gekennzeichnet, dass** die eingefügten anorganischen und/oder organischen Partikelfüllungen ebenfalls eine Partikelpopulation oder einen Partikelanteil enthalten, deren Korngröße unter 30 $\mu$m, vorzugsweise unter 20 $\mu$m liegt.

**23.** Herstellungsverfahren nach einem der Patentansprüche 18 bis 21, **dadurch gekennzeichnet, dass** es darin besteht, die anorganischen und/oder organischen Füllstoffe dem Vliesstoffprodukt in einem Gewichtsanteil zwischen 1% und 30%, vorzugsweise zwischen 5% und 25% des Gewichtes der Fasern oder Filamente, die die Schichten des Vliesstoffes bilden, einzufügen.

**24.** Herstellungsverfahren nach einem der Patentansprüche 1 bis 22, **dadurch gekennzeichnet, dass** die Gesamtmenge an anorganischen und/oder organischen Partikeln gleichzeitig dem Vliesstoff eingefügt wird, vor oder gleichzeitig mit dem chemischen Bindemittel.

**25.** Herstellungsverfahren nach einem der Patentansprüche 1 bis 22, **dadurch gekennzeichnet, dass** die anorganischen und organischen Partikel nacheinander dem Vliesstoff eingefügt werden, wobei die anorganischen Partikel nach den organischen Partikeln eingefügt werden.

**26.** Herstellungsverfahren nach einem der Patentansprüche 20 bis 25, **dadurch gekennzeichnet, dass** das Material oder die Materialien, das/die die anorganischen und/oder organischen Partikel bilden, eine höhere Schmelztemperatur aufweist/aufweisen, als das oder die Materialien, die die Fasern oder Filamente der Schichten bilden, gegebenenfalls höher als die Schmelz-, Aktivierungs-, Vernetzungs- oder Trocknungstemperatur des Bindemittels.

**27.** Herstellungsverfahren nach einem der Patentansprüche 20 bis 25, **dadurch gekennzeichnet, dass** die Schmelztemperatur der organischen Partikel niedriger ist als die der Fasern oder Filamente und je nach Fall niedriger oder höher als die Thermofixierungs-, Trocknungs-, Aktivierungs- oder Vernetzungstemperatur des das Bindemittel bildenden Materials.

**28.** Herstellungsverfahren nach einem der Patentansprüche 20 bis 27, **dadurch gekennzeichnet, dass** die Partikel, die eine Korngröße höher als 100 $\mu$m, vorteilhafterweise höher als 60 $\mu$m und vorzugsweise höher als 20 $\mu$m aufweisen, organischer Beschaffenheit oder Ursprungs sind, dass ein Teil der Partikel, die die anorganischen und/oder organischen Füllstoffe bilden, aus durch die Temperatur expandierbaren Partikeln bestehen und dadurch, dass die Endlosfasern oder -filamente, die die Schichten des Vliesstoffes bilden, aus einem thermoplastischen Polymer bestehen, das aus der Gruppe, bestehend aus den Polypropylenen, Polyestern, Polyamiden, Polyethylenen, sowie den Copolymeren dieser Polymere und den möglichen Gemischen dieser Polymere und Copolymere, ausgewählt wird.

**29.** Herstellungsverfahren nach einem der Patentansprüche 20 bis 28, **dadurch gekennzeichnet, dass** es darin besteht, im Fall des Einfügens der Partikelfüllungen und des Bindemittels durch Imprägnieren ein Thixotropier- oder Dispergiermittel zu verwenden, wenn die Partikeldichte um ungefähr 30%, vorzugsweise um ungefähr 20%, größer ist, als die des Bindemittels.

**30.** Herstellungsverfahren nach einem der Patentansprüche 20 bis 29, **dadurch gekennzeichnet, dass** es darin besteht, in das Vliesstoffprodukt, gegebnenfalls im Bereich von oder zwischen zwei oder mehreren aufeinander folgenden Schichten, Verstärkungsstrukturen in Form von Filamenten, Gitter(n) und/oder Textilien mit hohen Stabilisierungseigenschaften einzufügen, wobei die mindestens teilweise vom Bindemittel eingehüllten oder eingekapselten, anorganischen und/oder organischen Partikel mit Hilfe des genannten Bindemittels starre Verbindungen herstellen oder Brücken zwischen diesen Verstärkungsstrukturen und den Filamenten oder Fasern der Schichten bilden.

**Claims**

**1.** Flexible non-woven product that has a density that is less than 1 and that is formed by at least two layers of synthetic fibers or filaments superposed in the Z direction that is perpendicular to the XY plane of said product, having undergone at least one mechanical or hydraulic needling operation, whereby said non-woven product also integrates particulate feedstocks in the form of mineral and/or organic particles distributed in a monomodal or multimodal manner in this product and is at least partially coated or encapsulated by a binding material that can at least point-connect the filaments or fibers to one another,
non-woven product that is **characterized in that** at least one population or fraction of organic and/or mineral particles, called "large particles," has a size such that:

$$3 \times (\sqrt{SMf})^3 \leq v, \text{ preferably } 5 \times (\sqrt{SMf})^3 \leq v,$$

where SMf corresponds to the mean cross-section of the fibers or filaments that form the layers of the non-woven product, and v represents the mean individual volume of the organic or mineral particles.

2. Non-woven product according to Claim 1, wherein the large particles constitute the majority fraction, in terms of mass and/or volume, particulate feedstocks that are present in the non-woven product, and produce bridgings or connections between the nodes, meshes, fibers and filaments of the same layer and between the superposed layers that form the non-woven product.

3. Non-woven product according to Claim 1 or 2, wherein the large particles have at least one dimension d such that d ≥ 3 x DMf, preferably d ≥ 5 x DMf, where DMf corresponds to the mean diameter of the fibers or filaments that form the layers of the non-woven product.

4. Non-woven product according to any of Claims 1 to 3, wherein the large particles have a mean size that corresponds to at least 20% of the mean size of the visible pores of the non-woven product layers seen in the Z direction that is perpendicular to the XY plane of the non-woven product.

5. Non-woven product according to any of Claims 1 to 4, wherein the large particles have a mean grain size that is greater than approximately 50 μm, preferably greater than approximately 60 μm.

6. Non-woven product according to any of Claims 1 to 5, wherein the individual volume v of the large particles also verifies the following inequality: $v \leq 50 \times (\sqrt{SMf})^3$, preferably $v \leq 30 \times (\sqrt{SMf})^3$.

7. Non-woven product according to any of Claims 1 to 6, wherein the large particles have a mean size that is less than approximately 120%, preferably approximately 100%, of the mean size of the visible pores of the layers of the non-woven product seen in the Z direction that is perpendicular to the XY plane of said product.

8. Non-woven product according to any of Claims 1 to 7, wherein the large particles have a mean grain size that is less than approximately 400 μm, advantageously approximately 300 μm, and preferably approximately 200 μm.

9. Non-woven product according to any of Claims 1 to 8, wherein mineral and/or organic particulate feedstocks also comprise a population or fraction of particles whose grain size is less than 30 μm, preferably 20 μm.

10. Non-woven product according to any of Claims 1 to 9, wherein the mineral and/or organic feedstocks are present with a ratio by weight of between 1% and 30%, preferably between 5% and 25%, of the weight of the fibers or filaments that form the layers of the non-woven product.

11. Non-woven product according to any of Claims 1 to 10, wherein the material(s) forming the mineral and/or organic particles has (have) a melting point that is greater than that of the material(s) forming the fibers or filaments of the layers, if necessary at the melting point of activation, cross-linking or drying of the binder.

12. Non-woven product according to any of Claims 1 to 10, wherein the melting point of the organic particles is less than that of the fibers or filament and, as appropriate, less than or greater than the temperature of heat-setting, drying, activation or cross-linking of the material that forms the binder.

13. Non-woven product according to any of Claims 1 to 12, wherein the particles that form the feedstocks have a grain size that is greater than 100 μm, advantageously greater than 60 μm, preferably greater than 20 μm, and are of organic nature or origin.

14. Non-woven product according to any of Claims 1 to 13, wherein a portion of the particles forming the mineral and/or organic feedstocks consist of particles that can expand with the temperature.

15. Non-woven product according to any of Claims 1 to 10, wherein the continuous fibers or filaments forming the layers of the non-woven product are based on a thermoplastic polymer material that is selected from the group that is formed by polypropylenes, polyesters, polyamides, polyethylenes, as well as copolymers of these different polymers and the possible mixtures of these different polymers and copolymers.

16. Non-woven product according to any of Claims 1 to 15, wherein it integrates, optionally at or between two or more constituent layers, reinforcing structures in the form of filaments, grid(s) and/or textiles with characteristics of high stabilization, whereby the mineral and/or organic particles that are at least partially coated or encapsulated by the binder establish rigid bonds or produce bridgings between these reinforcing structures and the filaments or fibers of the layers by means of said binder.

17. Non-woven product according to any of Claims 1 to 16, wherein the material that forms the mineral particles is selected from the group that is formed by carbonates, silicates and sulfates such as calcium carbonate, magnesium hydroxide or aluminum hydroxide, barium sulfate, clay, kaolin, quartz, talc and the oxides and the hydroxides, such as titanium oxide, bauxite, and gibbsite.

18. Non-woven product according to any of Claims 1 to 17, wherein the material that forms the organic particles is selected from the group that is formed by fibrous or particulate celluloses, such as wood, lignin, graphites, micronized heat-settable recycled polymers, such as epoxy and bakelite, micronized thermoplastic polymers, such as polyethylene terephthalate, polybutylene terephthalate, polypropylene, polyethylene, polyamide, as well as their copolymers.

19. Non-woven product according to any of Claims 1 to 18, wherein the material that forms the binder is selected from the group that is formed by the resins with or without formaldehyde, liquid resins, in emulsion or in dispersion based on acrylate, styrene acrylate, vinyl acrylate, methacrylate, vinyl acrylate, acrylamides, methyl acrylamides, ethyl vinyl acetate, styrene butadiene, vinyl alcohol, butadiene acrylate, polyurethane, silicone, and cross-linking resins, based on phenol, melamine, urea, epoxy, alkyd, and polyester.

20. Process for the production of a flexible, non-woven product that has a density that is less than 1 and that is formed by at least two layers of fibers or filaments that are superposed in the Z direction that is perpendicular to the XY plane of said product, having undergone at least one mechanical or hydraulic needling operation, whereby said non-woven product also integrates particulate feedstocks in the form of mineral and/or organic particles distributed in a monomodal or multimodal manner in this product and at least partially coated or encapsulated by a binding material that can at least point-connect the filaments or fibers to one another,
process that is **characterized in that** it consists in implementing - prior to, simultaneously with or following - the integration of the binding material in and/or between the layers of fibers or filaments, whereby one stage for incorporating mineral and/or organic particulate feedstocks comprises at least one population or fraction of the organic and/or mineral particles, called "large particles," and has an individual volume such that $3 \times (\sqrt{SMf})^3 \leq v$,

preferably $5 \times (\sqrt{SMf})^3 \leq v$, where SMf corresponds to the mean cross-section of the fibers or filaments that form the layers of the non-woven product, and v represents the mean individual volume of the organic or mineral particles.

21. Production process according to Claim 20, wherein the large particles that are incorporated in the non-woven product correspond to particles according to any of Claims 2 to 8, whereby the needling operation is carried out before or after the introduction of the particulate feedstocks in and between the layers of the non-woven product.

22. Production process according to any of Claims 20 and 21, wherein the mineral and/or organic particulate feedstocks that are incorporated also comprise a population or fraction of particles whose grain size is less than 30 $\mu$m, preferably 20 $\mu$m.

23. Production process according to any of Claims 18 to 21, wherein it consists in incorporating the mineral and/or organic feedstocks in the non-woven product with a ratio by weight that is between 1% and 30%, preferably between 5% and 25%, of the weight of the fibers or filaments that form the layers of the non-woven product.

24. Production process according to any of Claims 1 to 22, wherein the set of mineral and/or organic particles is incorporated simultaneously in the non-woven product, prior to or simultaneously with the chemical binder.

**25.** Production process according to any of Claims 1 to 22, wherein the mineral particles and the organic particles are incorporated in a differentiated manner in the non-woven product, whereby the mineral particles are introduced following the organic particles.

**26.** Production process according to any of Claims 20 to 25, wherein the material(s) forming the mineral and/or organic particles has (have) a melting point that is greater than that of the material(s) forming the fibers or filaments of the layers, if necessary at the melting point of activation, cross-linking or drying of the binder.

**27.** Production process according to any of Claims 20 to 25, wherein the melting point of the organic particles is less than that of the fibers or filaments and, as appropriate, less than or greater than the heat-setting temperature, the drying temperature, the activation temperature or the cross-linking temperature of the material that forms the binder.

**28.** Production process according to any of Claims 20 to 27, wherein the particles that have a grain size that is greater than 100 $\mu$m, advantageously greater than 60 $\mu$m, and preferably greater that 20 $\mu$m have an organic nature or origin, and wherein a portion of the particles forming the mineral and/or organic feedstocks consists of the particles that can expand with temperature, and wherein the continuous fibers or filaments forming the layers of non-woven product are based on a thermoplastic polymer material that is selected from the group that is formed by polypropylenes, polyesters, polyamides, and polyethylenes, as well as copolymers of these different polymers and the possible mixtures of these different polymers and copolymers.

**29.** Production process according to any of Claims 20 to 28, wherein it consists in using a thixotropic agent or dispersing agent, in the case of an introduction of particulate feedstocks and binder by impregnation, when the density of the particles is greater by approximately 30%, preferably approximately 20%, than that of the binder.

**30.** Production process according to any of Claims 20 to 29, wherein it consists in integrating the following in the non-woven product: optionally at or between two or more consecutive layers, reinforcement structures in the form of filaments, grid(s) and/or textiles with high stabilization characteristics, and mineral particles and/or organic particles that are at least partially coated or encapsulated by the binder that establishes rigid connections or that produces bridgings between these reinforcement structures and the filaments or fibers of the layers by means of said binder.

Fig. 1

Fig. 2

Fig. 3A

Fig. 3B

Charge Rupture Moyenne
Pression=200,0bars

Fig. 4

Allongement Rupture
Pression=170,0bars

Fig. 5

Déformation sous charge à chaud en %

Fig. 6

Fluage sous 100N à chaud en %

Fig. 7

Fig. 8

Fig. 9

Fig. 10

Fig. 11

Fig. 12

## RÉFÉRENCES CITÉES DANS LA DESCRIPTION

**Documents brevets cités dans la description**

- FR 8816711
- US 6221973 B
- US 4076917 A
- EP 0583086 A
- WO 9731036 A
- US 6299936 B
- EP 11664418 A
- US 20090048371 A
- BE 858986
- WO 2006068574 A